# EUROPÄISCHE PATENTSCHRIFT

(11) **EP 1 273 727 B1**
(45) Veröffentlichungstag und Bekanntmachung des Hinweises auf die Patenterteilung: **05.03.2008**
(21) Anmeldenummer: 02013196.7
(22) Anmeldetag: 15.06.2002
(51) Int. Cl.: E03F 3/06, E02F 5/10

(54) **Verfahren und Einrichtung zum Verlegen von Leitungsrohren, insbesondere von Kanalisationsrohren**
Process and device for laying of pipes, in particular sewer pipes
Procédé et dispositif de pose de conduits, en particulier de canalisations

(30) Priorität: 18.06.2001 DE 10129208; 26.06.2001 DE 10130777
(43) Veröffentlichungstag der Anmeldung: 08.01.2003
(73) Patentinhaber: PipeTrain International Ltd., Wakefield West Yorkshire WF1 2HB (GB)
(72) Erfinder: Lauscher, Manfred, 52156 Monschau Rohren (DE)
(74) Vertreter: Schmidt, Karl Michael

(56) Entgegenhaltungen:
- AT-U2- 26
- GB-A- 1 512 204
- US-A- 3 638 438
- US-A- 3 820 345
- US-A- 4 094 152

## Beschreibung

Die Erfindung betrifft Verfahren sowie Einrichtungen zum Verlegen von Leitungsrohren, insbesondere von Kanalisationsrohren im Erdreich, mit mitlaufender Vortriebspresse, welche in einem Schacht angeordnet ist, in welchem die zu verlegenden Rohre nacheinander eingelegt werden, gemäß Oberbegriff der Patentansprüche 1 und 9 in der AT-u2-000026 offenbart

Verfahren und Einrichtungen dieser Art werden zum Verlegen von Kanalisationsrohren oder aber auch von Rohren anderer Art, verwendet. Üblicherweise wird hierbei am offenen Schacht gearbeitet. Dies bedeutet, daß in einem beispielsweise zu erschließenden Baugebiet ein entsprechender Graben mit einigen Metern Tiefe mittels Bagger ausgehoben wird, wobei der Graben nach oben hin trichterförmig sich erweiternd ausgebildet ist, und die Neigung der Seitenflächen sich aus der Untergrundbeschaffenheit und der daraus resultierenden Naturböschung ergibt. Insgesamt entsteht dabei ein Graben, der bei einer Gesamttiefe von 3 m bereits mehr als 8 m in der Breite messen kann. Ein solches Verlegeverfahren wird in der Fachsprache Verlegung am offenen Schacht bezeichnet.

Aus diesem Grund ist es weiterhin bekannt, am halboffenen Schacht zu arbeiten, wobei die Seitenflanken des Schachtes mit sog. Verbautafeln fixiert werden. Damit entsteht ein deutlich schmalerer Graben.

Weiterhin ist es bekannt, lediglich einen schmalen ,ggfs schmaler als der zu verlegende Rohrdurchmesser, mit Verbautafeln gesicherten Graben herzustellen, und unter dem Graben die Rohre mittels einer Vortriebspresse unter dem mit Verbautafeln gesicherten Bereich ins Erdreich zu pressen. Im letztgenannten Fall, sowie beim gänzlich geschlossenen Rohrvortrieb werden natürlich nur stationäre Pressstationen in der sogenannten Startgrube verwendet, wo auch nach jedem Vortriebshub neue Rohre eingelegt werden.

Ein altes Verfahren ist aus der DE 26 03 565 C2 bekannt. Hierbei wird in einer Baugrube, der sog. Startgrube die Vortriebspresse und das Vortriebswerkzeug eingebracht. Die Vortriebspresse wird dabei wegen der enormen, auftretenden Kräfte hydraulisch betätigt. Eine Presse, ein Druckausgleichsring sowie Gleitschienen und Druckausgleichsvorrichtungen werden hier in der Startgrube montiert, wobei somit die gesamte Pressenanordnung stationär dort installiert ist. Des weiteren wird ein Vortriebswerkzeug gemäß dem oben genannten Schneidschuh nach vorne gedrückt. Wird mit einem solchen Schneidhub die Länge eines zu verlegenden Leitungsrohres erreicht, so wird die Vortriebspresse in entgegengesetzter Richtung zurückgefahren, und von oben ein Leitungsrohr zwischen Vortriebspresse und Schneidschuh abgesenkt. Danach wird wieder die Vortriebspresse erneut ausgefahren, wobei das eingesetzte Leitungsrohr und der Schneidschuh nach vorne getrieben werden. Nach Erreichen einer weiteren Leitungsrohrlänge wird die Vortriebspresse wieder erneut zusammengefahren und das nächste zu verlegenden Leitungsrohr von oben eingelegt. Wie oben bereits beschrieben, wird das anfallende verdrängte Erdreich überirdisch von einer Fördereinrichtung, im allgemeinen von einem Bagger abgetragen.

Erfahrungsgemäß kommt es nach einer Strecke von 100-200 m zu enormen Gleitreibungskräften an dem bereits verlegten Rohrabschnitt, weil die Vortriebspresse eine immer länger werdende Gesamtrohrlänge vorzuschieben hat. Nach den besagten 100-200 m werden die möglichen Verlegemaximallängen erreicht. Hinzu kommt im übrigen eine enorme Druckbelastung auf das jeweils zuletzt verlegte Leitungsrohr, was die effektiven Kräfte abfangen muß, die das gesamte bereits verlegte Leitungsrohr nach vorne schieben. Grundsätzlich gewähren nicht alle Leitungsrohrhersteller eine solche Festigkeit, daß dies möglich ist.

Aus der AT-U-000-026 ist ein sogenannter Gleitverbau bekannt, bei dem die Verbautafeln zur Vortriebsmaschine dazugehören und mit der Vortriebseinrichtung mitgeschoben werden. Bei dieser an sich vorteilhaften Einrichtung ist jedoch von Nachteil, dass am Boden des Gleitverbaus Erdreich nach oben schieben kann und den Vortrieb behindert. Zum anderen stützt sich der Gleitverbau bei Vorschub wesentlich auf den Hinterfüllmaterial und dem bereits verlegten Rohrabschnitt ab, dass das verlegte Rohr beschädigt werden kann.

Aus der DE 42 41 856 ist des weiteren bekannt, daß die Vortriebspresse mitlaufend ist, und zwar in der Art, daß das zuletzt verlegte Rohr als Widerlager für die Vortriebspresse genutzt wird, um einen weiteren Rohrabschnitt oder ein weiteres Leitungsrohr nach vorne zu schieben.

Grundsätzlich ergibt sich hierbei ebenfalls der Nachteil, daß auf die Rohre eine enorme Kraft in Axial-Richtung ausgeübt wird.

Wie eingangs bereits beschrieben, werden diese Verfahren in der Regel am halboffenen Schacht durchgeführt.

Für das Nachrüsten oder Neuverlegen von Kanalisationsrohren in bereits baulich erschlossenen Gebieten besteht keineswegs die Möglichkeit, einen offenen Schacht zu graben, da aus o. g. Gründen dieser eine enorme Breite hätte, der seitlich beispielsweise wegen einer fertig bebauten Straße nicht realisierbar wäre. Dies bedeutet, daß in bereits bebauten Gebieten grundsätzlich die Einschränkung besteht, daß nur an halboffenem Schacht bzw. unter dem selben verlegt werden kann. Das bedingt normalerweise, d.h. bei bekannten Verfahren die verbautafelmäßige Sicherung der nur schmalen Gräben, die aufgrund der Straßenführung und -bebauung nicht breiter sein können. So sind bei Verfahren und Einrichtungen der bekannten Art lange Gräben vorab zu erstellen, und mit Verbautafeln entsprechend zu sichern.

Ein solcher Bauaufwand ist enorm zeitaufwendig. Dennoch ist es notwendig, daß der Verlegeschacht seitlich unbedingt gesichert werden muß, um ein Nachrutschen der Erde in den freigegrabenen Schacht zu vermeiden, und um somit die Möglichkeit von Schäden an der bestehenden Bebauung unbedingt zu vermeiden.

Der Erfindung liegt somit die Aufgabe zugrunde, Verfahren und Einrichtungen dieser Art dahingehend weiterzuentwickeln, daß grundsätzlich in der halboffenen Bauweise verlegt, aber mit erheblich geringerem Aufwand die Seitenwände des Schachtes gesichert werden.

Beim erfindungsgemäßen Verfahren hierzu wird die gestellte Aufgabe durch die kennzeichnenden Merkmale des Patentanspruches 1 gelöst.

Weitere vorteilhafte Ausgestaltungen des erfindungsgemäßen Verfahrens sind in den abhängigen Verfahrensansprüchen 28 angegeben.

Im Hinblick auf eine Einrichtung der gattungsgemäßen Art ist die gestellte Aufgabe erfindungsgemäß durch die kennzeichnenden Merkmale des Patentanspruches 9 gelöst.

Weitere vorteilhafte Ausgestaltungen hierzu sind in den übrigen abhängigen Einrichtungsansprüchen angegeben.

Grundsätzlicher Kern des erfindungsgemäßen Verfahrens ist es, daß die benötigten Widerlagerkräfte durch eine Spreizung des Gesamtvorschubs geliefert werden.

Dies bedeutet, daß nicht mehr lediglich nur das Rohr ins Erdreich gepreßt bzw geschoben wird, sondern daß auch der darüber liegenden "halboffene" Schacht simultan mitgeschnitten wird.

Hierdurch werden Verbautafelelemente der üblichen Bauart völlig überflüssig. Es können somit in vorteilhafter Weise, ohne vorher einen Graben ausheben und mit Verbautafelelemente vorbereiten zu müssen, auch in bestehenden, bebauten Bauabschnitten Rohre im Erdreich verlegt werden. Dabei kann in weiterer vorteilhafter Ausgestaltung der Schneidschuh simultan zu den Verbautafelelementen, die hier als Schneid- und als Verbautafelelement gleichzeitig fungieren, bewegt werden, oder aber der Schneidschuh kann auch unabhängig abschnittsweise davon bewegt werden.

Bei einem unabhängig von den Verbautafelelementen bewegbaren Schneidschuh besteht der Vorteil darin, daß der durch die Verbautafelelemente gebildete Verbau stillsteht, währenddem nunmehr der Schneidschuh in einem geschlossenen Bereich, d. h. ohne Schacht zumindest über einen entsprechenden Abschnitt weitergeführt werden kann. Hierbei ist beispielsweise an den Einsatz gedacht, bei dem man mit dem Verlegen eines Rohres in dieser Weise am quasi halboffenen Schacht beginnt, beispielsweise eine Autobahn erreicht, den Verbautafelbereich stillstehen läßt und unabhängig davon nun den Schneidschuh hubweise unabhängig bewegt und Rohr für Rohr unter der Autobahn bis zur anderen Seite hindurchpreßt, und sodann die gesamte Anordnung abbaut, auf der anderen Seite wieder aufbaut, und von dort aus wieder in der halboffenen Weise weiterpreßt, bzw weiterverlegt.

Kumulativ zu dieser Verlegemethode besteht der Kern einer weiteren bevorzugten Verfahrensausgestaltung darin, daß in der Verlegegrube hinter der Vortriebspresse das vor der Vortriebspresse entnommene Erdreich wieder verfüllt und in rohr- oder grubenaxialer Richtung sogleich verdichtet wird, so dass sich ein weiterer Teil der aufzubringenden Widerlagerkräfte für den Vortrieb daraus ergeben kann.

Der enorme Vorteil dieses Verfahrens besteht darin, daß im wesentlichen eine reißverschlußförmige Bewegung des gesamten Verlegeschachtes in Schneidrichtung erfolgt. Besonders vorteilhaft ergibt sich hier, daß ein über die gesamte Verlegestrecke verbautafelmäßig gesicherter Schacht überflüssig ist, weil lediglich ein notwendiger Schachtabschnitt simultan oder quasisimultan mit der Schneidbewegung des Schneidschuhes gleichzeitig mitgeschnitten wird. Durch die vorderen Verbautafelelemente des Verbaus wird ein Schacht geschnitten, der über die übrigen mitgeführten Verbautafelelemente des Verbaus, seitlich das Erdreich hält. Der Schacht hat dabei nur die für die Einbringung neuer Rohre und für das Ausbaggern des verdrängten Erdreiches notwendige Länge. Somit kommt man zu einer Schachtlänge von etwa 2- bis 3-facher zu verlegender Rohrlänge. Da nun sofort am entgegengesetzten Ende der sich nun ergebenden mitlaufenden Verlegegrube das Erdreich sofort wieder aufgefüllt wird, ist in Verbindung mit diesem Verfahren das Erdreich lediglich über die Länge der mitgeschobenen Verbautafelelemente, mit einer Gesamtlänge von 2- bis 3-facher Rohrlänge offen bzw "halboffen". Davor und dahinter ist das Erdreich geschlossen. Das heißt, es läuft ein verbautafelgesicherter Schacht mit dem Schneidprozeß mit, welcher lediglich die Länge der 2- oder 3-fachen Rohrlänge der zu verlegenden Leitungsrohre hat.

Ein wesentlicher, erfindungsgemäßer und somit vorteilhafter Aspekt entsteht dadurch, daß das wiederverfüllte, zuvor vor dem Schneidschuh oder über dem Schneidschuh entnommene Erdreich, also auch das von den mitgeschobenen Verbautafeln eingeschlossene Erdreich nach hinten wieder verfüllt und verdichtet wird. Dies hat eine besondere Auswirkung auf den Verlegeprozeß insgesamt. Die axiale Verdichtung muß in einer Richtung entgegengesetzt zur Schneidschuhbetätigungsrichtung oder zur Schneidrichtung aufgebracht werden. Dies bedeutet, daß hierbei die Möglichkeit besteht, durch die ggfs sogleich, d. h. während des Schneidprozesses vollzogene Verdichtungskompression in entgegengesetzter Richtung zur Schneidrichtung entsprechende Widerlagerkräfte zu erhalten, so daß das Widerlager entgegen der Verfahrensweise gemäß DE 42 41 856 C2 nicht mehr auf dem zuletzt verlegten Rohr liegt. Das Rohr wird in dieser entsprechenden Vorgehensweise deutlich entlastet, zumindest in axialer Richtung. Da das-Rohr-an-sich jedoch üblicherweise einen Rundquerschnitt aufweist und das Erdreich als zunächst lose Schüttung angenommen, den Druck aus axialer Richtung auch in radialer Richtung des Rohres umlenkt, wird jedoch diese physikalische Tatsache ausgenutzt, daß auch mit einer Verdichtungskompression in axialer Richtung eine dennoch allseitige schlüssige Kompression des Erdreiches entsteht. Aufgrund des Rundquerschnittes sind die zu verlegende Betonleitungsrohre üblicherweise radial ausgesprochen belastbar. Somit können Beschädigungen an den Kopfseiten der Leitungsrohre, wie sie auftreten können, wenn ausschließlich das Betonrohr widerlagernd fungiert, vermieden werden. Dies ist deshalb bedeutsam, weil unbeschädigte Kopfseiten der Betonrohre auch für eine ausreichende Dichtigkeit des Kanalrohrstranges wichtig sind.

Ein weiterer, noch deutlich wirksamerer Vorteil besteht in der oben beschriebenen Einsparung eines ansonsten notwendigen, zuvor vorgegrabenen, und mit über mehrere hundert Meter oder sogar über Kilometer vorbereiteten, verbautafelgesicherten Schachtes.

Weiterhin ist vorteilhaft angegeben, daß bei zu verlegender Gesamtleitungslänge abschnittsweise im geschlossenen Rohrvortrieb gearbeitet wird, bei der zeitweise eine stationäre Vortriebspresse in den durch die Verbautafelelemente gebildeten Verbau eingesetzt, und der Schneidschuh und ggfs die Schneidschuhpresse vom durch die Verbautafelelemente gebildeten Verbau entkoppelt wird. Auf diese Weise kann geschlossener Rohrvortrieb mit dem erfindungsgemäßen halboffenen Verlegeverfahren kombiniert werden. Ein Ausführungsbeispiel hierfür ist in den Zeichnungen offenbart.

In weitere vorteilhafter Ausgestaltung ist angegegeben daß als Widerlagerkräfte für den Schneidschuhvortrieb und/oder den Verbauvortrieb zumindest teilweise die Kompressions- oder Verdichtungskräfte im wiederverfüllten Erdreich dienen. So kann das bereits verlegte Rohr deutlich entlastet werden.

Eine Einrichtung dieser Art besteht daher im Kern der Erfindung gemäß Patentanspruch 9, lediglich aus einer Anordnung, die die 2- oder 3-fache Rohrleitungslänge aufweist. Möglicherweise kann die gesamte Einrichtung sogar noch kürzer sein und nur etwas länger als die Länge eines jeweils zu verlegenden Leitungsrohres sein.

Dabei ist ausgestaltet, daß innerhalb des Verbaus der Schneidschuh samt Schneidschuhpresse im eingefahrenen Zustand, sowie eine Klemm- und Schubplatte zum Vorschub des Verbaus, und eine Verdichtungs- und Schubplatte zur Verdichtung des wiederverfüllten Erdreiches angeordnet bzw integriert angeordnet sind. Somit entsteht in der Gesamtheit eine Einrichtung, die nicht nur die notwendigen Pressen und Presswerkzeuge enthält, sondern im Ganzen von einem Verbau umgeben sind, der mitgeschnitten wird, so daß es einer entsprechenden Schachtvorbereitung mit Schachtverbauung nicht mehr bedarf.

In weiterer vorteilhafterAusgestaltung ist angegeben, daß im vorderen Bereich der Einrichtung der Schneidschuh samt Schneidschuhpresse angeordnet ist, daß im mittleren Bereich der Einlegebereich für die zu verlegenden Einzelrohre liegt, und daß im hinteren Bereich der Wiederverfüllungs- und Verdichtungsbereich für zumindest einen Teil des vorne entnommenen Erdreiches ist.

Im Gegensatz zum oben erwähnten Stand der Technik besteht hierbei der wesentliche Vorteil darin, daß es keiner in Preßeinrichtung vorwärts wirkenden zweiten Presse bedarf, die den verlegten Rohrabschnitt nach vorne schiebt, sondern es bedarf nur einer Schneidschuhpresse. In entgegengesetzter Richtung wirkt, wie bereits beschrieben, eine Presse zur Kompression des nach hinten wieder verfüllten Erdreiches. Mit der entsprechenden Abstützung hinten ist eine Vortriebspresse nun für den Vorschub der aus den Verbautafelelementen bestehenden Verbaus vorgesehen.

Hierbei können die Zylinder jedoch doppelt wirkend sein, so daß der Vortrieb nach vorne und das Verdichtungspressen nach hinten aus einer gemeinsam wirkenden Druckmittelbeaufschlagung erfolgt. In diesem Fall wird sehr vorteilhaft zumindest ein Teil der für den Vortrieb notwendigen Widerlagerkräfte aus dem Kompressionshub des zu verdichtenden Erdreiches erbracht.

In weiterer vorteilhafter Ausgestaltung ist der Verbaubereich segmentiert und die Verbautafelelemente sind gelenkig miteinander verbunden. Somit können entsprechende Erdgegebenheiten besser berücksichtigt werden.

In weiterer vorteilhafter Ausgestaltung ist angegeben, daß auch ein entsprechendes Relativspiel zwischen dem vorderen Verbautafelbereich und dem Schneidschuh besteht. Auch hierbei können entsprechende Bodenbegebenheiten berücksichtigt werden. Das erwähnte mechanische Spiel beträgt dabei in der Größenordnung von < 20 cm. Damit ist eine spannungsfreie Verlegung von Rohren im Erdreich gegeben, da es ja nicht auf eine entsprechende konsequente Schneidung und Fortschiebung des Verbautafelbereiches ankommt, sondern auf ein darin spannungsfrei verlegtes Rohr.

Grundsätzlich gilt, daß über den entsprechend nach vorne wirkenden und nach hinten abstützenden Arbeitshub, der zum Verpressen oder Komprimieren der wiederverfüllten Erde eingesetzt wird, und gleichzeitig der Vorschub für die gesamte Einrichtung samt Verbautafelelemente bewerkstelligt wird. Hierbei wird als zusätzlishes Widerlager für das Vortreiben dieser Einrichtung, also Schneidschuh samt Pressen sowie mitgeführte Verbautafelelemente zusätzlich widerlagernd sowohl am zuletzt verlegten Rohr, als auch am verpreßten oder zu verpressenden Erdreich bewerkstelligt werden kann. Hiermit kommt es zu einer günstigen Kraftaufteilung, die im wesentlichen anders wirkt, als dies im o. g. Stand der Technik beschrieben ist.

Zur seitlichen Abstützung der Verbautafelelemente dienen quasi x-förmige Abstütz-und Verbauaussteifungen, die sowohl nach oben, als auch nach unten eine jeweils konkave Ausnehmung haben, um nach unten das zu verlegende Rohr und nach oben die Hantierung mit Maschinenelementen oder Förderbändern zu ermöglichen.

In einer vorteilhaften Ausgestaltung ist vorgesehen, daß die Abstütz- und Verbauaussteifungen weitere vertikale Stellzylinder zur Anpassung an eine veränderte Schachttiefe vorhanden sind.

Für die Erreichnung größerer Schachttiefen ist vorteilthaft vorgeschlagen, daß weitere Aufsatz-Verbautafelelemente sowie zu deren gleichwertiger Abstützung wie die übrigen Verbautafelelemente Abstütz- und Aussteifungsaufsätz vorgesehen sind. Dadurch wird der gesamte Verbau samt inner Abstützungen für eine größere Schachttiefe einsetzbar.

Es ist vorteilhaft, wenn die Abstütz- und Aussteifungsaufsätze in Horizontalrichtung spreizbar sind, so daß auch der in der Höhe so vergrößerte Verbau von den oben genannten Vorteilen der Spreizung, zum einen bei Veränderung der zu verlegenden Rohrdurchmesser, aber auch zur Widerlagerkraterhöhung beim Vorschub, wie oben beschrieben, einsetzbar ist.

Zu diesem Zweck kann auch die Klemm- und Schubplatte vertikal geteilt und mit Horizontalstellern, versehen sein.

Zur Schachttiefenvergrößerung ist in vorteilhafter Ausgestaltung vorgesehen, daß auch die Klemm- und Schubplatte mit Vertikalstellern zur Verstellung auf eine größere Schachttiefe verstellbar ist.

Analog muß bei bei Absenken auf eine größere Schachttiefe der Klemm- und Schubplatte ein ebenfalls horizontal spreizbarer Klemm- und Schubaufsatz enthalten, der mit derselben über die Vertikalsteller verbunden ist.

In weiterer vorteilhafter Ausgestaltung ist angegeben, daß entsprechende Fördermittel zum Fördern des am Schneidschuh, oder über dem Schneidschuh und/oder am vorderen Verbautafelbereich ausgeräumtes Erdreich vorgesehen sind. Das dort eingebrachte, bspw. als Transportband ausgestaltete Fördermittel transportiert Erdreich nach hinten zum Verdichtungsbereich, und überschüssiger Aushub, der beispielsweise durch die Rohrverdrängung entsteht, wird dabei weggebaggert bzw. ausgeräumt und abtransportiert.

Das Verfahren sowie die Einrichtung, die nach diesen Verfahren arbeiten, öffnen den besagten Verlegebereich nur über einen entsprechenden Abschnitt der 2-3 Rohrlängen entspricht, und schließt danach wieder, wie im Reißverschlußverfahren.

Zur Erreichung einer extrem effizienten Verdichtung des wiederverfüllten Erdreiches im hinteren Bereich, wird mit einer Verdichtungs- und Schubplatte verdichtet bzw. eine solche Platte mit Hilfe der entsprechenden Arbeitszylinder geschoben, welche im wesentlichen rohrpaßgenau oder zumindest konturentsprechend ausgebildet ist. Bei Erreichen der wesentlichen Verdichtung gilt die Preßplatte und der verdichtete Bereich dann wieder als zusätzliches Widerlager, um die Einrichtung mit dem mitgeführten Verbautafelbereich wieder weiter nach vorne zu schieben.

In weiterer vorteilhafter Ausgestaltung ist angegeben, daß die Verbautafelelemente Injektionsöffnungen aufweisen können, zur Einbringung von Schmierstoffen beispielsweise in Form von Tonpulver. Damit lassen sich die Verbautafeln im Erdreich relativ leicht in Vortriebsrichtung nach vorne schieben. Bei einer Bewegung oder einem Hub, bei dem Schneidschuh und Verbautafelbereich nicht simultan, sondern relativ zueinander bewegt werden, kann u. U. als Widerlager während des Schneidschuhhubes der feststehend verbleibende Verbautafelbereich dienen. Die seitlichen Reibe- und Abstützkräfte können dabei ausreichend sein, um dem Schneidschuh ein entsprechendes Widerlager zu geben.

In weiterer vorteilhafter Ausgestaltung ist angegeben, daß die querverlaufenden, quasi x-fömigen Abstütz- und Verbauaussteifungen zumindest in Vertikalrichtung geteilt sind, und dort, oder entsprechend gleichwirkend, Arbeitszylinder haben, mit denen man den Abstand der Verbautafelelemente zueinander variieren kann. Dadurch ist die Einrichtung zum einen variabel einsetzbar bei verschiedenen gegebenen Rohrdurchmessern, zum anderen ergibt sich jedoch auch eine Möglichkeit, die in einer verfahrensgemäßer Ausgestaltung von enormen Vorteil ist. Dabei kann, wenn in den Arbeitszylindern des Schneidschuhes die dort gemessenen Druckmitteldrücke wegen des möglicherweise schwierigen und harten Erdreiches groß werden, und um die notwendigen Widerlagerkräfte zum Vorschub des Schneidschuhes nicht oder zumindest bei weitem nicht auf das zuletzt verlegte Rohr geben zu müssen, wird durch ein entsprechendes Ausfahren besagter Arbeitszylinder der Verbautafelbereich kurzzeitig ortsfest gesetzt, und der Schneidschuh wird in Bezug auf die Verbautafelelemente alleine nach vorne getrieben. Um die dabei notwendigen auftretenden größeren Kräfte aufzunehmen, können sodann die besagten Abstütz- und Verbauaussteifungen durch die oben beschriebenen, horizontal wirkenden Arbeitszylinder derartig gespreizt werden, daß die Verbautafelelemente fester an die Schachtwandung des zuvor gebildeten Erdschachtes gepreßt werden. Dadurch können enorme Widerlagerkräfte aufgebracht werden und der Schneidschuh kann somit auch durch schwieriges Erdreich hindurchgepreßt werden, ohne das zuletzt verlegte Rohr möglicherweise zu beschädigen, wie dies zumindest im oben genannten Stand der Technik ansonsten der Fall wäre.

In weiterer vorteilhafter Ausgestaltung ist angegeben, daß die x-förmigen Abstütz- und Verbauaussteifungen auch eine horizontale Teilung bzw. Zweiteilung aufweisen können, dergestalt daß auch die Höhe und damit die Tiefe des Schachtes durch entsprechende per vertikal ausgerichteter Stellzylinder einstellbar. Dies dient zur Herstellung unterschiedlicher Verlegetiefen und unterschiedlicher Rohrdurchmesser.

In weiterer vorteilhafter Ausgestaltung ist angegeben, daß die auf beiden Seiten jeweils vorne angeordneten Verbautafelelemente eine angeschrägte Vorderkante haben, so daß diese sich besser in das Erdreich schneiden.

Ebenso vorteilhaft ist es dementsprechend, daß ebenso die Verdichtungs- und Schubplatte vertikal geteilt und ansonsten wie die Klemm- und Schubplatte analog den Ansprüche 22 bis 25 verstellbar ausgebildet ist. Hierbei liegen die oben genannten Veränderbarkeiten der Einrichtung zur Anpassung an größere Rohrdurchmesser und/oder veränderbare Schachttiefen zugrunde.

Der grundlegende Gedanke der vorliegenden Erfindung in all ihren verfahrensgemäßen Ausgestaltungen, sowie auch der Einrichtung ist es, daß nicht mehr nur das Rohr in seinem Durchmesser ins Erdreich geschnitten wird, sondern es wird ein Schacht geschnitten, der gleichzeitig seitlich abgestützt wird, und anschließend hinten sofort wieder verfüllt wird. Dabei ist ein nur kurzer aber mitlaufender Schacht gegeben.

Die Erfindung ist in der Zeichnung dargestellt und nachfolgend näher beschrieben.

Es zeigt:
Figur 1: Draufsicht auf erfindungsgemäße Einrichtung.
Figur 2: Seitenansicht auf erfindungsgemäße Einrichtung.
Figur 3 bis Figur 6: weitere Seitenansicht in verschiedenen Arbeitsphasen
Figur 7: Vorderansicht auf Abstütz- und Verbauaussteifung
Figur 8: Abstütz- und Verbauaussteifung mit größer Schachttiefe
Figur 9: Vorderansicht der Klemm- und Schubplatte
Figur 10: teleskopierbare Klemm- und Schubplatte
Figur 11: Vorderansicht der Verdichtungs- und Schubplatte
Figur 12: teleskopierbare Verdichtungs- und Schubplatte
Figur 13: Seitenansicht des Verbaus mit aufgesetzten weiteren Verbautafelelementen
Figur 14 bis 20: Vorschubsequenz mit kombiniertem erfindungsgemäßen halboffen Vortrieb und abschnittsweise geschlossenem Vortrieb.

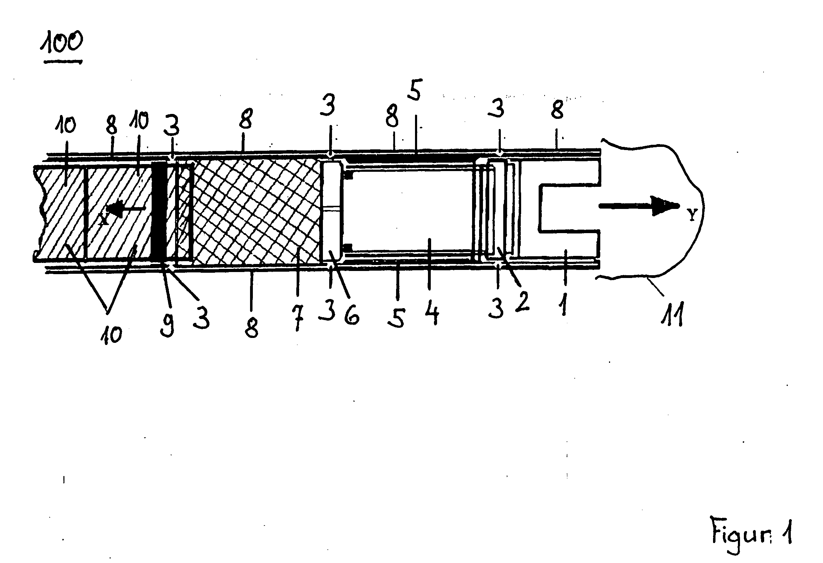

Figur 1 zeigt zunächst eine Draufsicht auf die erfindungsgemäße Einrichtung 100, die ein Verlegen nach dem erfindungsgemäßen Verfahren ermöglicht. Hierbei wird außen die Einrichtung als Verbau von den Verbautafelelementen 8 gebildet. Das heißt, der seitliche Bereich ist nicht nur etwa der Länge eines Rohres entsprechend, sondern etwa zwei bis drei Rohrlängen entsprechend. Die Verbautafelelemente 8 können dabei nicht mit Verbautafeln bekannter Art verglichen werden, die in einen Schacht, der zunächst gegraben wird, dann zur Sicherung der Wände eingebracht und fixiert werden, sondern die Verbautafelelemente 8 werden mitbewegt. Der verbaute Bereich misst somit nur zwei bis drei Rohrlängen, wird aber mitgeführt. Somit bewegt sich die Einrichtung sowohl oberhalb des Erdreiches, als auch unterhalb der Schacht- oder Grabenoberkante.

Nach vorne und nach hinten ist das Erdreich 11 geschlossen bzw. noch geschlossen oder wieder geschlossen. Die erfindungsgemäße Einrichtung 100 bewegt sich somit durch das Erdreich wie im Reißverschlußverfahren, der vorne geöffnet und hinten sofort wieder geschlossen wird. Hierdurch können Verlegemaßnahmen vorgenommen werden, auch in bebauten Gebieten, in denen an den Seiten bebaute Straßenbereiche angeordnet sein können. Diese können weder nachrutschen, noch bedarf es eines seitlichen Böschungsmaßes, da der Bereich, in dem gerade aktuell gepreßt wird, ja seitlich verbaut ist. Im Wesen der Erfindung, sowohl in verfahrensgemäßer, als auch in einrichtungsgemäßer Hinsicht wird somit nicht mehr einfach der Rohrdurchmesser ins Erdreich geschnitten, sondern hier wird mit den Verbautafelelementen 8 selbst ein insgesamt sich ergebender Schacht geschnitten, in dem das Rohr bzw. die Einzelrohre nacheinander verlegt und der Schacht anschließend sofort wieder verfüllt wird.

Die Verbautafelelemente 8 können dabei starr miteinander verbunden sein, vorteilhaft ist jedoch, sie über die Gesamtlänge der Einrichtung in zwei oder drei oder auch in mehreren Teilen zu segmentieren. Die Segmente können dabei wahlweise auch gelenkig miteinander verbunden sein, so daß man im Schachtmaß und in der Schachtführung durchaus von einer geradlinigen Bewegung aufgrund des schwierigen Erdreiches oder auch abschnittsweise schwierigen Erdreiches geringfügig abweichen kann, wodurch das Rohr selbst aber spannungsfrei und geradlinig verlegt wird. Hierzu kann ein einstellbarer, zumindest aber kontrollierbarer Spielraum von +/- 20 cm zwischen verlegter Rohrwandung und Verbautafelinnenwandung gegeben sein.

Im vorderen Bereich ist der Schneidschuh 1 angeordnet und hinter dem Schneidschuh die entsprechende Schneidschuhpresse 4 in einem Maschinenrohr angeordnet. Das Maschinenrohr stimmt dabei wiederum mit der Kontur und dem Maß des zu verlegenden Rohres überein, und ist als ledigliche nach unten gerichtete Rohrhalbschale, sozusagen als Verbauboden 7 ausgebildet, und die Länge kann etwa eines oder zwei zu verlegenden Rohre entsprechen. Im mittleren Bereich kann links von der Klemm- und Schubplatte 6 dann ein neues Rohr eingelegt werden. Im hinteren Bereich wirken sodann entsprechende Arbeitszylinder auf die Verdichtungs- und Schubplatte 9 in entgegengesetzter Richtung und verdichten das vorne ausgehobene und nach hinten transportierte Erdreich wieder in X-Richtung, so daß vor und hinter der Einrichtung das Erdreich noch bzw. wieder verschlossen ist. Die besagten Arbeitszylinder betätigen die Verdichtungs- und Schubplatte 9 zum axialen Verdichten des Erdreiches hinten, entgegen der Vortriebs- oder Vorschubrichtung. Die Verdichtungs- und Schubplatte 9 ist so konturiert, daß sie möglichst bündig über der Außenwandung des verlegten Rohres 10 läuft.

Mit Positionsnummer 5 sind Verbindungsteile bezeichnet, die die vortriebsbewirkenden Kopplungsteile des gesamten Verbaus bezeichnet, und die Klemm- und Schubplatte 6 und ggfs weitere Druckmittelzylinder oder motorisch koppelbare Elemente der Einrichtung mit dem Verbau als solches kraftschlüssig verbinden. Letzendlich erfolgt die Mitnahme des Verbaus während des Vortriebes hierüber.

Wie oben bereits ausgeführt und weiterhin noch deutlich dargestellt wird, können die Arbeitszylinder druckmittelschlüssig korrespondierend miteinander verbunden sein, so daß der Schneidschuhkrafthub in Vortriebsrichtung Y nach vorne, und in entsprechender widerlagernder Richtung der Verdichtungshub X wirkt.

Auf diese Weise wird das zuletzt verlegte Rohr nicht mehr, oder zumindest nicht mehr im vollem Maße als Widerlager notwendig, um die Einrichtung 100 bzw. den Schneidschuh 1 nach vorne zu treiben. Die gesamte Einrichtung 100 samt Verbautafelelemente 8 und Schneidschuh 1 kann sich dabei mit ggf. derselben Arbeitszylindermimik an dem bereits wieder verdichteten Erdreich und ggf. teilweise, aber dann nur noch teilweise, an dem bereits verlegten Rohr 10 abstützen, um die gesamte Einrichtung mit den Verbautafelelementen 8 den Schacht weiter nach vorne zu schneiden. Das vorne neu anfallende Erdreich 11 wird entnommen und hinten wieder verfüllt und sogleich verdichtet.

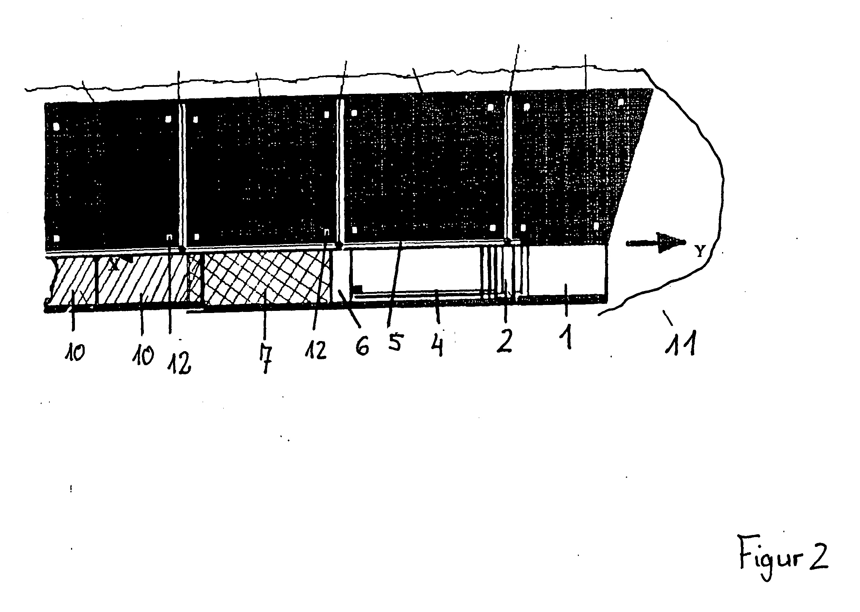

Figur 2 zeigt eine Seitenansicht, die lediglich nur noch den segmentierten Aufbau der aneinandergereihten Verbautafelelemente 8 zeigt. Hierbei ist ebenfalls zu erkennen, daß die Verbautafeln 8 auch Öffnungen 12 enthalten können, durch die hindurch beispielsweise pulverisierter Ton als Schmiermittel einbringbar ist. Ebenfalls zu erkennen ist, daß die vorderen Verbautafelelemente 8 angeschrägt sind, so daß sie eine gute Schneidwirkung in das Erdreich erzielen. Alle übrigen Elemente schauen nach unten aus dem Verbau heraus und sind so positioniert, wie in Figur 1.

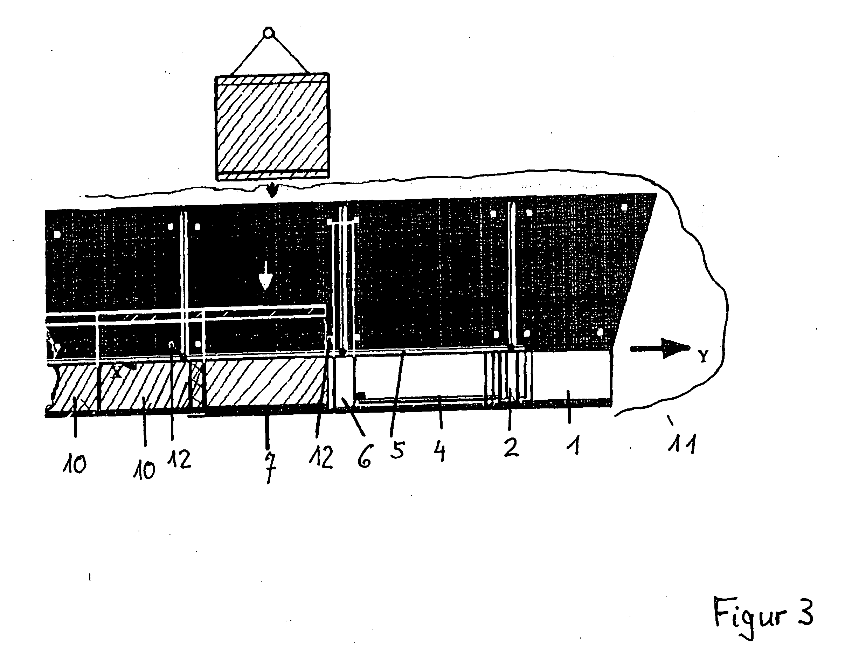

Figur 3 zeigt den Verlegevorgang eines neu zu verlegenden Einzelrohres. Hierbei ist der Verbau wie in Figur 2 mit allen dort bereits beschriebenen Einzelelementen in Seitenansicht zu sehen. Am Verbauboden 7 ist in diesem Vortriebsstadium eine Lücke gegeben, die einer Einzelrohrlänge entspricht. Dieses wird hier von oben bspw mit einem Kran eingelassen.

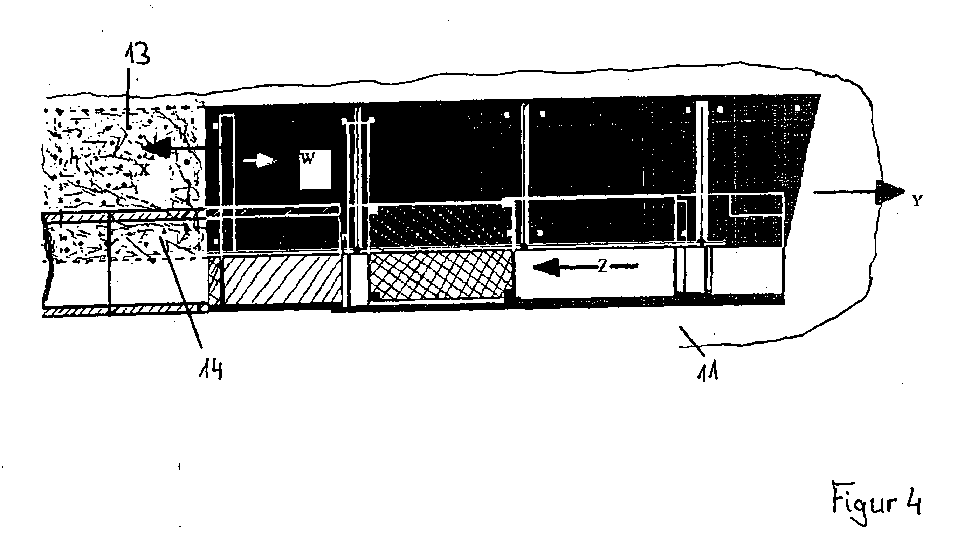

Figur 4 zeigt die gemeinsame Vorschubbewegung der teleskopierbaren Schneidschupresse 4, wie sie aus Figur 3 zu erkennen ist. Die Schneidschuhpresse fährt in Z-Richtung aus, wodurch durch die entprechende Ankopplung nun der gesamte Verbau sich in Y-Richtung bewegt. Positionsnummer 13 zeigt die Stellung des Verbaus vor Ausfahren der Schneidschuhpresse. Mit einer Verdichtungbewegung der Verdichtungs- und Schubplatte in X-Richtung erfolgt dann die Verdichtung des wiederverfüllten Erdreiches 14.

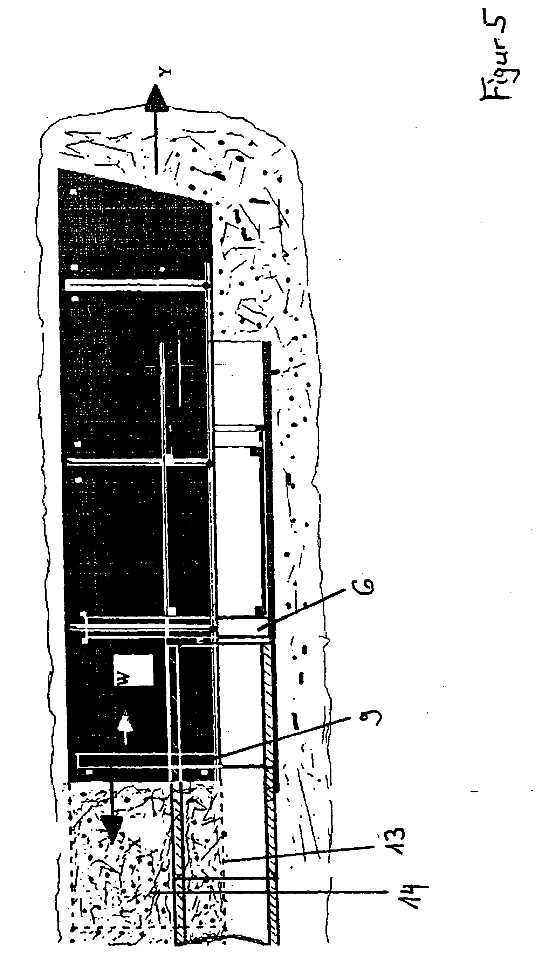

Figur 5 zeigt die Vorschubbewegung des Verbaues ohne Betätigung der teleskopierbaren Schneidschuhpresse, sondern durch Betätigen der Klemm- und Schubplatte 6 und/oder der Verdichtungs- und Schubplatte 9.

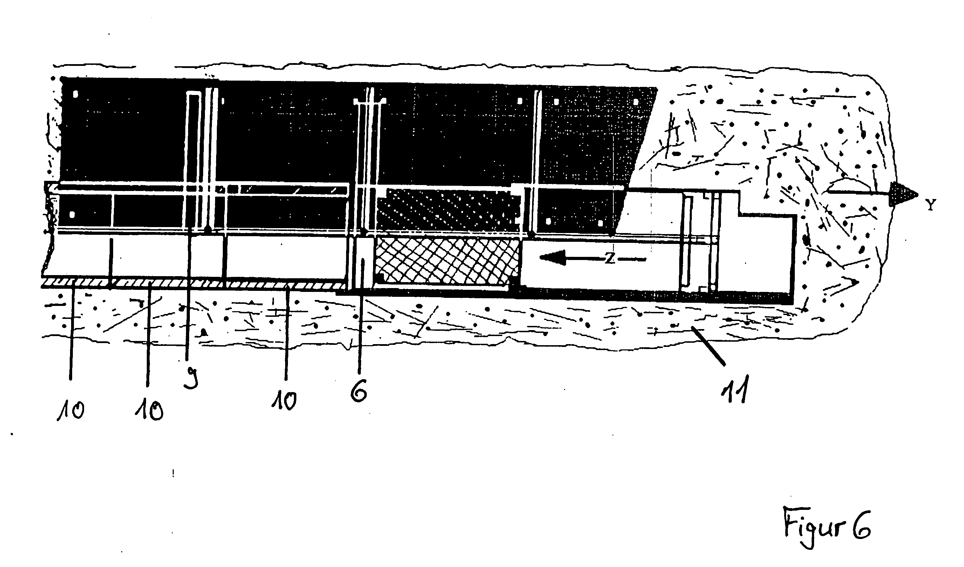

Figur 6 zeigt eine Vorschubbewegung des Schneidschuhes, ohne daß der Verbau mitgenommen wird. Die Vorschubbewegung des Schneidschuhes erfolgt alleine über die teleskopierbare Schneidschuhpresse.

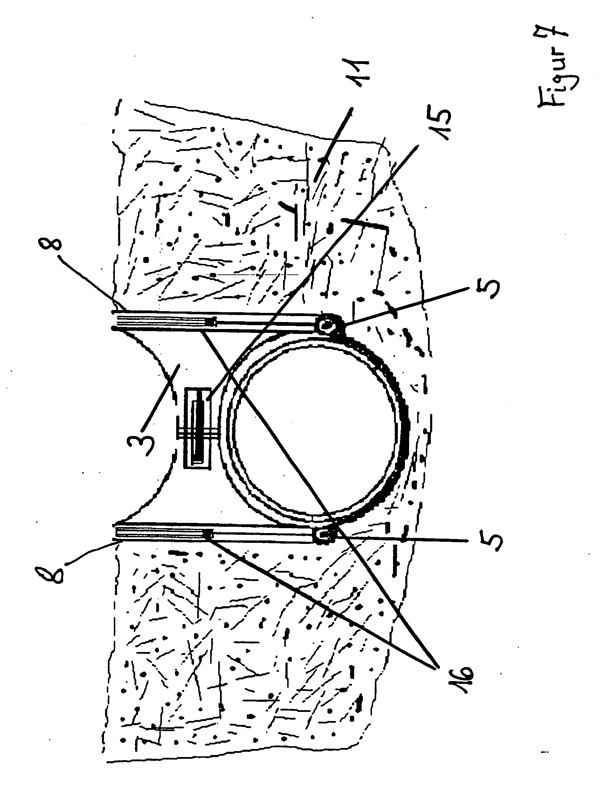

Figur 7 zeigt die x-förmigen Abstütz- und Verbauaussteifungen 3, die in der Frontansicht nun zu erkennen sind, und die jeweils gegenüberliegenden Verbautafelelemente 8 in dem definierten Abstand zueinander halten, und somit die Gesamtkonstruktion statisch erhalten. Die x-förmigen Abstütz- und Verbauaussteifungen 3 sind hier vertikal geteilt. Durch die Anbringung entsprechender horizontaler Stellzylinder 15 in den Schnittlinien kann eine solche Abstütz- und Verbauaussteifung 3 nun auch in horizontaler Spreizrichtung verändert werden, in vertikaler Stellrichtung wird die Tiefe des Schachtes bestimmt und an das entsprechend zu verlegende Rohr angepaßt. Dazu kann die Abstütz- und Verbauaussteifung 3 durch vertikale Stellzylinder 16 in eine größere Schachttiefe abgesenkt werden. Die nach oben und unten kreisförmige Kontur der Abstütz- und Verbauaussteifung 3 ist zumindest nach unten komplementär zum Rohraußenumfang, so daß die gesamte Einrichtung 1 über das verlegte Rohr hinweg geschoben werden kann.

Weiterhin wird mit dieser Verstellbarkeit auch erreicht, daß wenn die gesamte Einrichtung mit Verbautafelelementen nach vorne geschnitten wird, bzw. sich ins Erdreich schneidet, das Breitenmaß für diesen Gesamtvorschub etwas gelockert, d.h. vermindert wird, so daß die Einrichtung leicht nach vorne schiebbar ist, und erst dann, wenn Widerlagerkräfte benötigt werden, wieder eine seitliche Abspreizung durch entsprechendes Anstellen der Arbeitszylinder bewirkt wird. Die Einrichtung ist hierdurch besonders variabel d.h. auch bei schwierigen Untergrund einsetzbar.

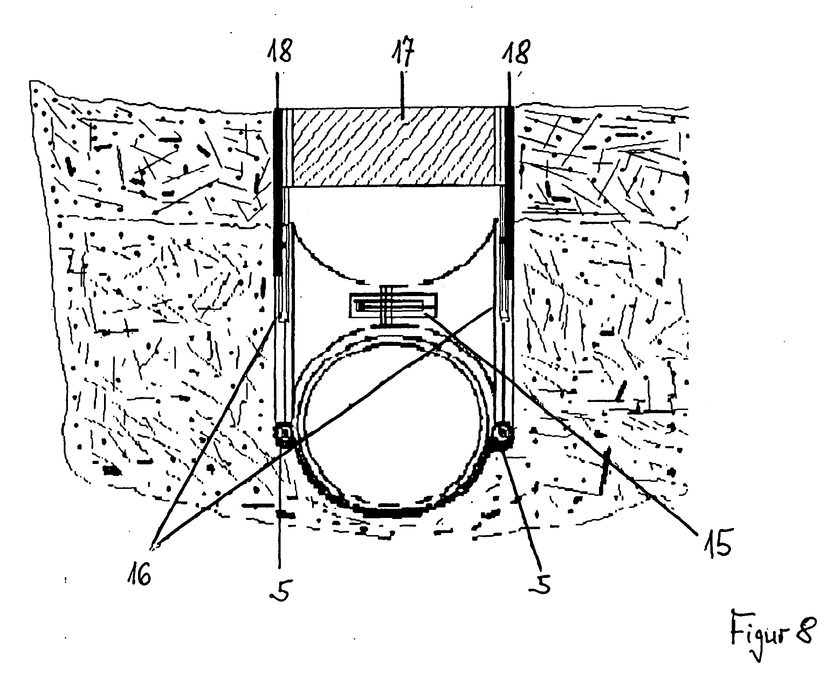

Figur 8 zeigt die Abstütz- und Verbauaussteifung 3 in vertikal teleskopierbarem Zustand. Zur Herstellung eines tieferen Schachtes sind wird nun die Abstütz- und Verbauaussteifung 3 nach unten gefahren, und oben werden Aufsatzverbautafelemente 18 aufgesetzt, und ebenfalls eine horizontale Abstützung derselben durch ein Abstütz- und Versteifungsaufsatz 17 zur funktiongleichen Versteifung der Aufsatzverbautafelemente 18 eingebracht.

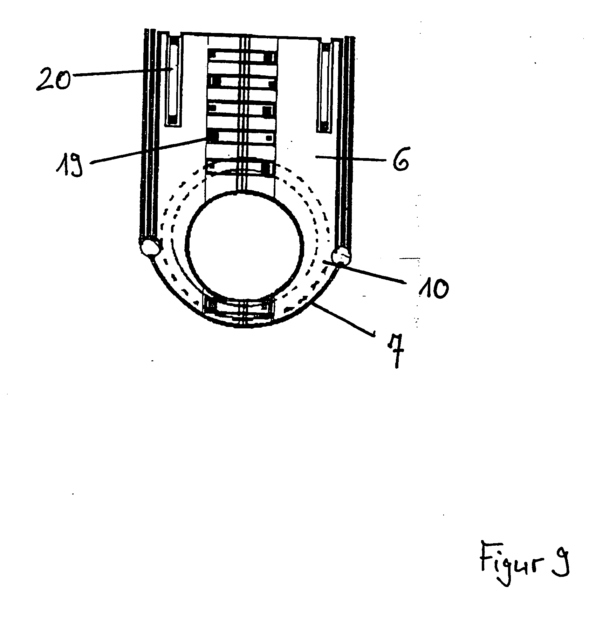

Figur 9 zeigt in Vorderansicht die Klemm- und Schubplatte 6 des Verbaus. Diese weist konsequenterweise ebenfalls eine Vertikalteilung auf und ist über entsprechende horizontale Versteller 19 spreizbar um auch an dieser Stellung eine Anpassung an verschiedene Rohrdurchmesser zu geben. Über vertikale Versteller ist auch hier eine Absenkmöglichkeit analog zu den oben beschriebenen Abstütz- und Verbauaussteifungen gegeben.

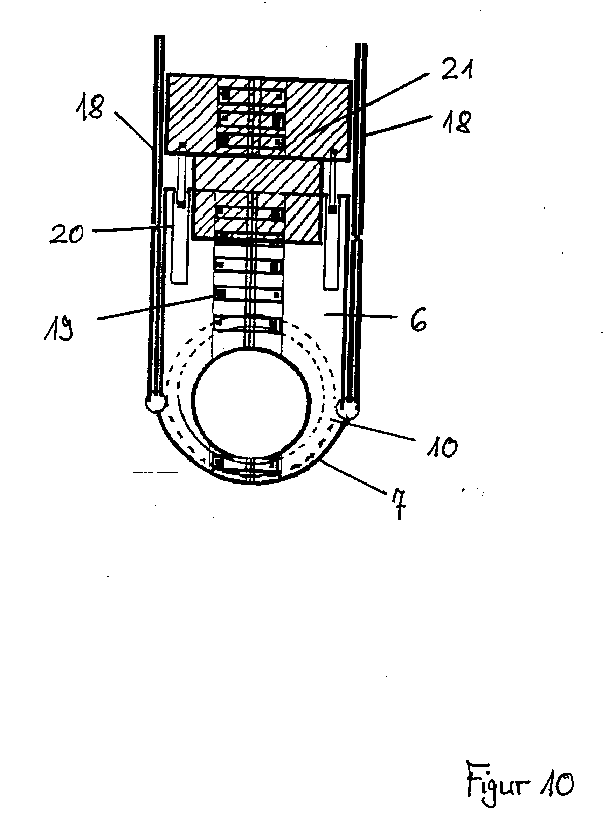

Figur 10 zeigt die Vorderansicht der Klemm- und Schubplatte 6, entsprechend analog auch in vertikaler Teleskopierbarkeit. Dabei wird zur Erreichung einer größeren Schachttiefe ein entsprechender verstellbarer Klemm- und Schubaufsatz eingebracht.

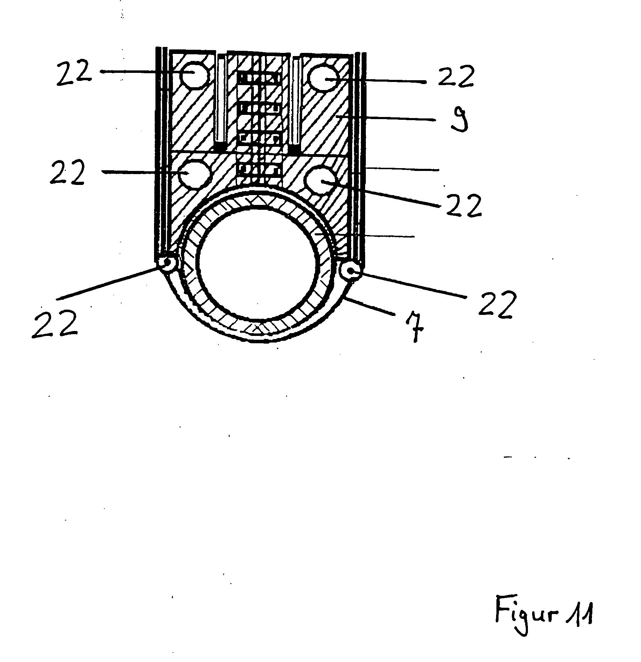

Figur 11 zeigt die Verdichtungs- und Schubplatte, die konsequent wie die in Figur 9 und 10 dargestellte Klemm- und Vorschubplatte aufgebaut ist und horizontal und vertikal verstellbar ist . Hierbei sind außerdem die Schubzylinder 22 dargestellt .

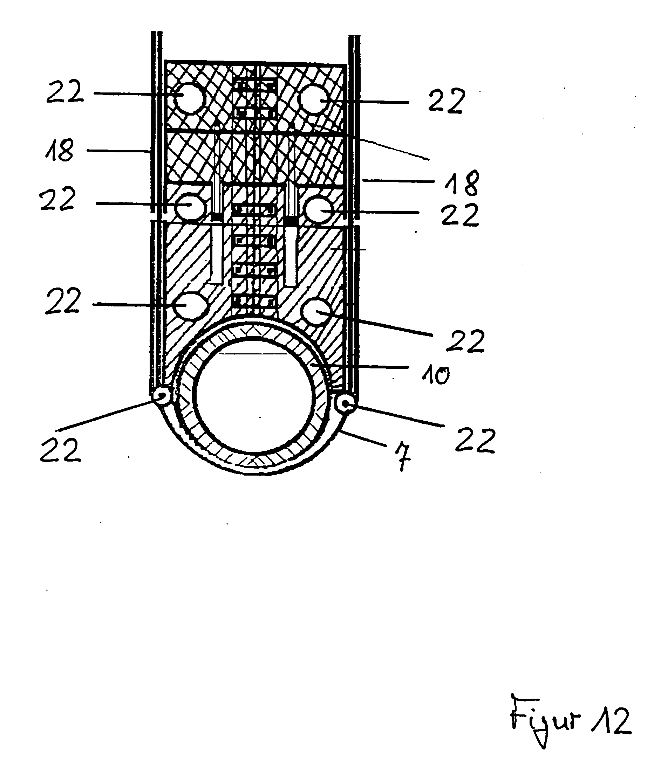

Figur 12 zeigt analog zur Klemm- und Schubplatte nun auch die gfleichartig aufgebaute Verdichtungs- und Vorschubplatte 9 mit horizontaler und vertikaler Verstellbarkeit, sowie entsprechenden Aufsätzen bei Absenkung in eine größere Schachttiefe.

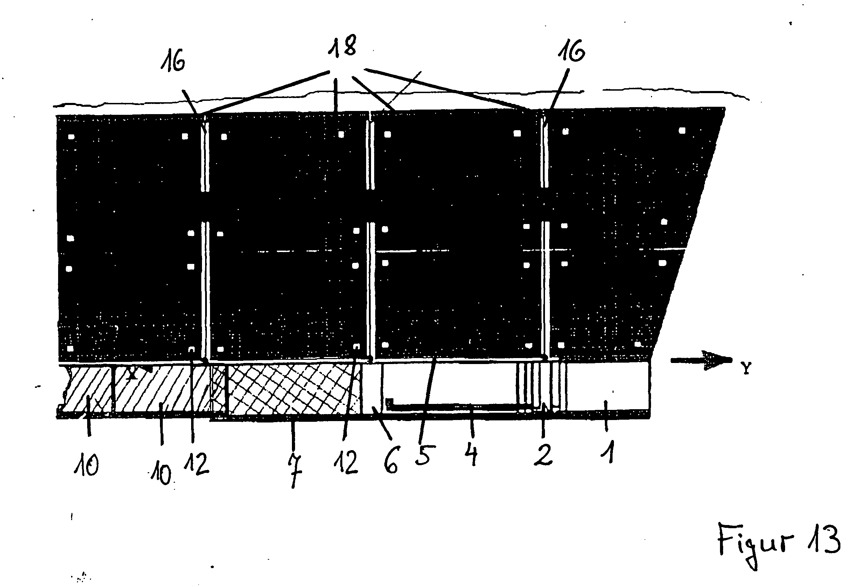

Figur 13 zeigt nur noch einmal in Seitenansicht den Verbau, der nun zur Erzielung einer größeren Schachttiefe zu den sonstigen Verbautafelelementen nun noch die Aufsatzverbautafeln 18 enthält. Zwischen den Verbautafeln sind die vertikalen Stellzylinderpositionen der Abstütz- und Verbauaussteifungen und der beiden Schubplatten 6 und 9 angedeutet.

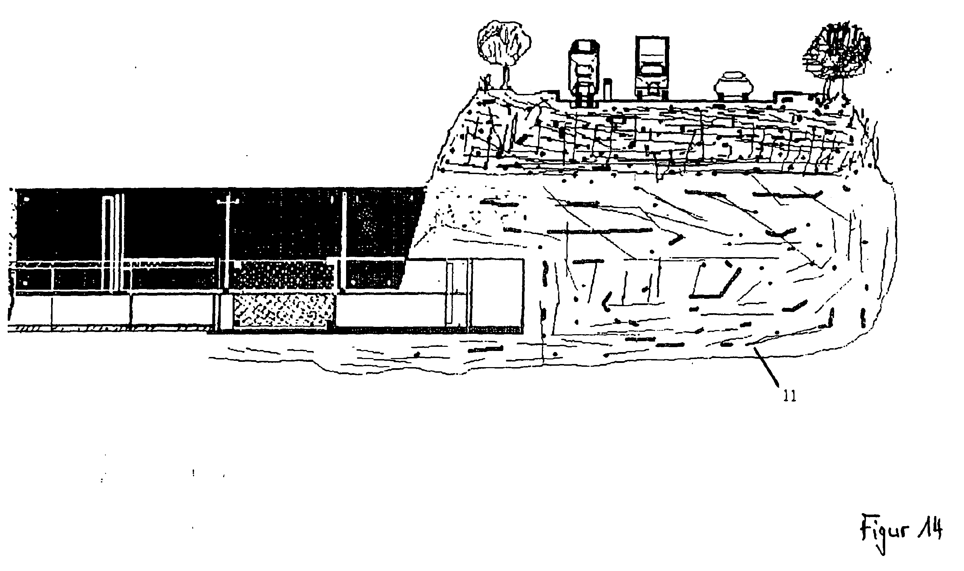

Die Bildsequenz Figur 14 bis Figur 20 zeigt die ebenfalls erfindungsgemäße Kombinationsmöglichkeit zwischen halboffen Vortrieb der erfindungsgemäßen Weise mit einem gschlossenen Rohrvortrieb mit temporär eingebrachter Pressstation, um unter einer Verkehrs-Trasse hindurch zu kommen.

Figur 14 zeigt, wie bei stillstehendem Verbau die Schneidschuhpresse alleine ausfährt. Nach hinten wird dann widerlagernd abgestützt.

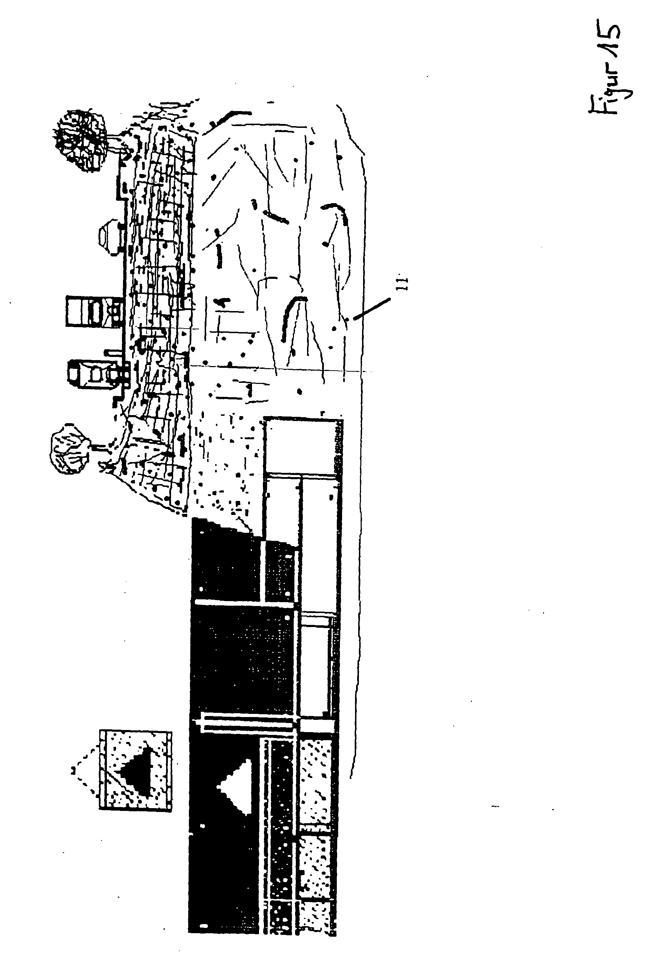

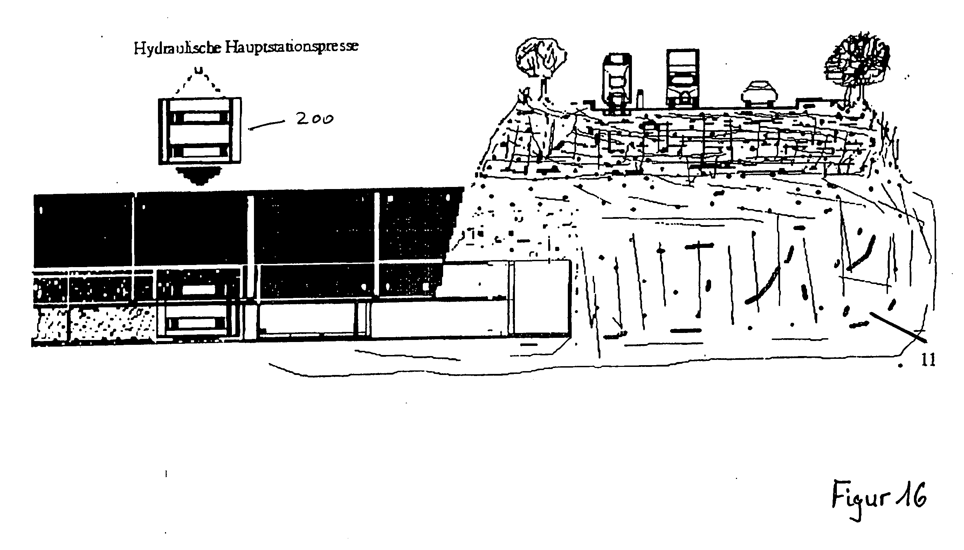

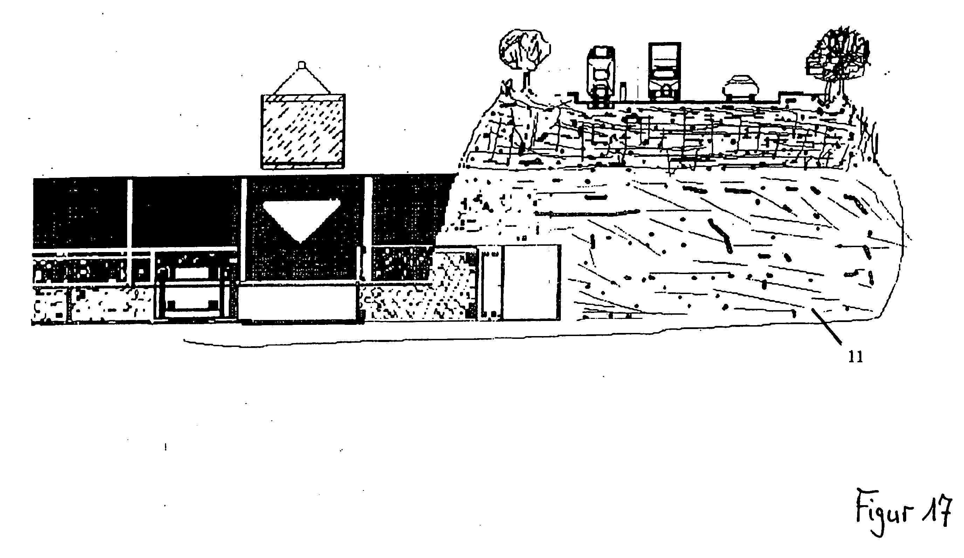

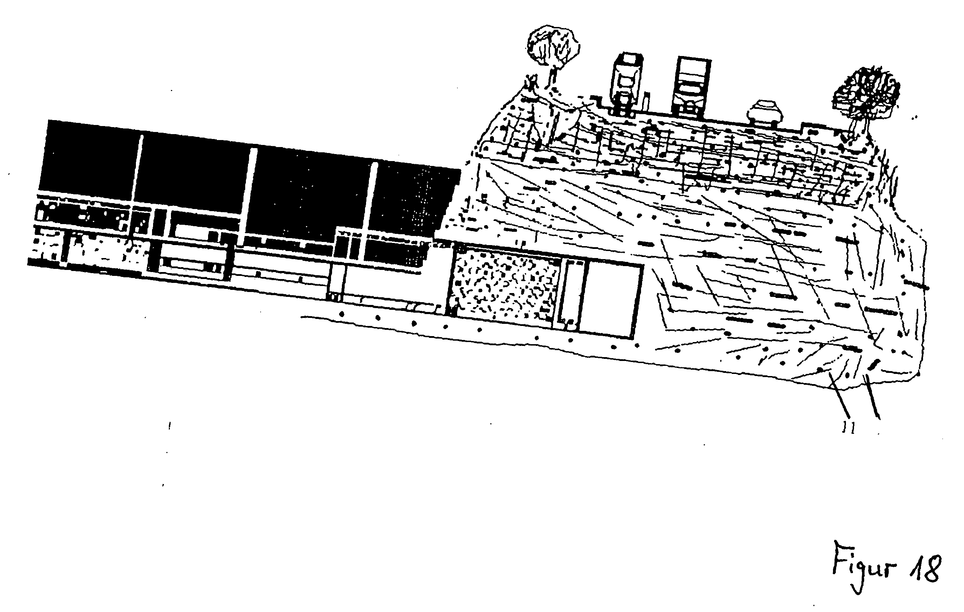

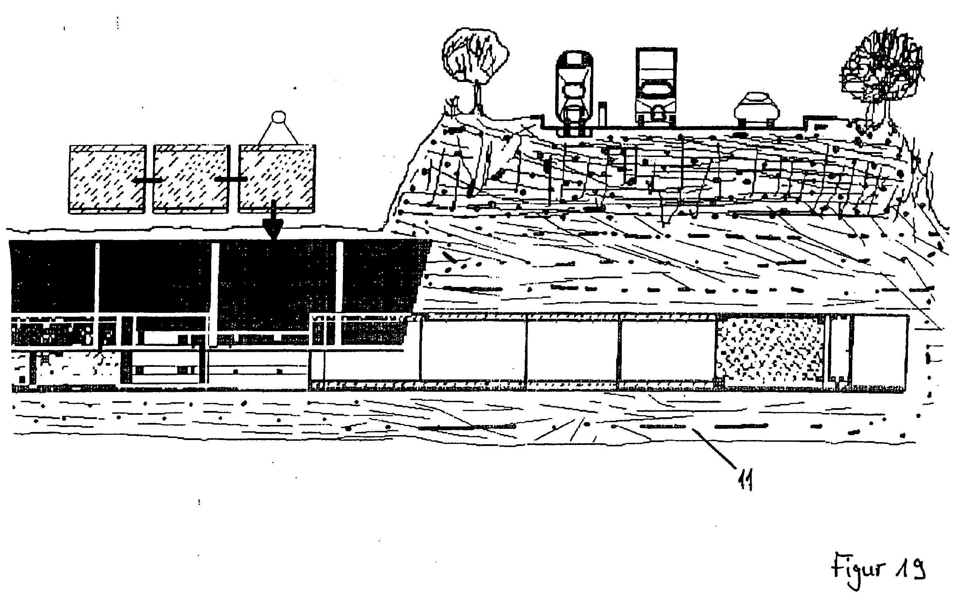

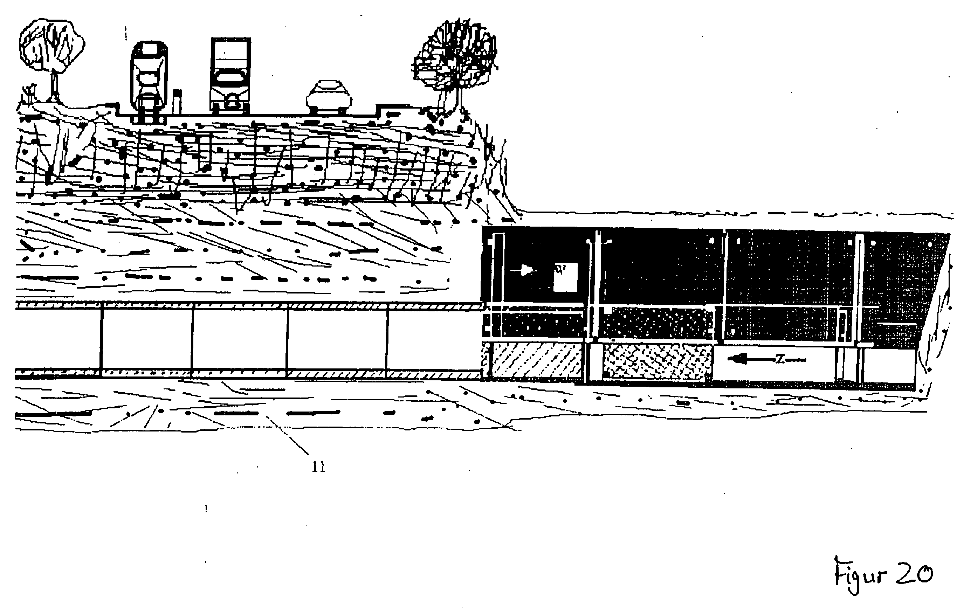

Sodann wird an der oben bereits dargestellten Stelle des Verbaus ein verlegtes Rohr wieder entnommen gemäß Figur 15, und wie in Figur 16 gezeigt, erfolgt in die Lücke das Absenken einer hydraulischen Pressstation 200 in den Verbau. Sodann wird die Schneidschuhpresse zusammengefahren und vor die Presstation gemäß Figur 17 wird ein weiteres Rohr eingelegt. Gemäß Figur 18 wird nun mit Hilfe der Pressstation das Rohr samt Schneidschuhpresse nach vorne geschoben, unter der Verkehrs-Trasse hindurch. Hierzu ist der Schneidschuh, siwie die Schneidschuhpresse natürlich vom Verbau entkoppelt. Figur 19 zeigt nun einen hubweisen Vortrieb mit einem Rohr nach dem anderen, bis gemäß Figur 20 die andere Seite erreicht ist, und nun der gesamte Verbau samt aller beinhalteten Elemente an der Eintrittsseite des geschlossenen Vortriebs abgebaut und an der Austrittsseite wieder aufgebaut wird. Nun kann wieder der Vortrieb in halboffener Weise weitergeführt werden.

### Bezugszeichenliste

- 1:: Schneidschuh
- 2:: Druckverteilungsring und Steuerkammer
- 3:: Abstütz und Verbauaussteifungen
- 4:: Schneidschuhpresse
- 5:: Verbindungsteile Schneidschuhpresse zum Verbau
- 6:: Klemm- und Schubplatte
- 7:: Verbauboden
- 8:: Verbautafelelemente
- 9:: Verdichtungs- und Schubplatte
- 10:: bereits verlegte Betonrohre
- 11:: Erdreich
- 12:: Injektionsöffnungen
- 13:: Stellung des Verbaus vor Ausfahren der Schneidschuhpresse in Richtung z
- 14:: wiederverfülltes Erdreich
- 15:: horizontale Stellzylinder
- 16:: vertikale Stellzylinder
- 17:: Abstütz- und Aussteifungsaufsatz
- 18:: Aufsatzverbautafelelemente
- 19:: horizontale Versteller
- 20:: vertikale Versteller
- 21:: Klemm- und Schubaufsatz
- 22:: hydraulische Schubzylinder
- 23:: Verdichtungs- und Schubaufsatz
- 100:: Einrichtung
- 200:: hydraulische Pressstation

- X:: Erdreichverdichtungsrichtung
- Y:: Vortriebsrichtung
- Z:: Ausfahrrichtung Schneidschuhpresse

## Patentansprüche

1. Verfahren zum Verlegen von Leitungsrohren, insbesondere von Kanalisationsrohren im Erdreich (11), mittels einer durch das Erdreich bewegbaren Einrichtung mit in Vortriebsrichtung mitbewegbaren Verbautafelelementen (8) und darin mitlaufenden Vortriebsmitteln, einem Schneidschuh (1) und einer Schneidschuhpresse (4), welche in einem Schacht angeordnet ist, in welchem auch die zu verlegenden Rohre nacheinander eingelegt werden, wobei ein gesamter Verlegeschacht ggfs mit mitlaufenden Vortriebsmitteln geschnitten wird, indern Verbautafelelemente (8) in Verlege-/Schneidrichtung des Schneidschuhes (1) nach vorne mitgeschoben werden,
**dadurch gekennzeichnet,**
**dass** die Schneidschuhpresse (4) in einem Maschinenrohr angeordnet ist, welches mit der Kontur und dem Maß des zu verlegenden Rohres übereinstimmt und als lediglich nach unten gerichtete Rohrhalbschale sozusagen als Verbauboden (7) ausgebildet ist, und dass wenn die gesamte Einrichtung (100) mit Verbautafelelemente (8) nach vorne geschnitten wird, bzw ins Erdreich schneidet, das Breitenmaß für diesen Gesamtvorschub etwas gelockert d.h. vermindert wird, so dass die Einrichtung (100) leicht nach vorne schiebbar ist, und erst dann, wenn Widerlagerkräfte benötigt werden, wieder eine seitliche Abspreizung durch entsprechendes Anstellen der Arbeitszylinder bewirkt wird.

2. Verfahren nach Anspruch 1
**dadurch gekennzeichnet,**
**daß** der in Vorschubrichtung vorne anfallende Erdaushub hinten im Bereich des bereits verlegten Rohrleitungsabschnittes sofort wieder verfüllt und in Axialrichtung verdichtet wird, so dass ein weiterer Teil der für den Vortrieb notwendigen Widerlagerkräfte auf der verfüllten Erdaushubkompression abgefangen wird.

3. Verfahren nach Anspruch 1 und/oder 2,
**dadurch gekennzeichnet,**
**daß** die Verbautafelelemente simultan zum Schneidschuhvortrieb mitgeschoben werden.

4. Verfahren nach Anspruch1 und/oder 2,
**dadurch gekennzeichnet,**
**daß** die Verbautafelelemente zumindest hubweise unabhängig vom Schneidschuhvortrieb schiebbar sind.

5. Verfahren nach Anspruch 4,
**dadurch gekennzeichnet,**
**daß** der Schneidschuh bei stillstehenden Verbautafelelementen zumindest hubweise nach vorne bewegt wird.

6. Verfahren nach Anspruch 5,
**dadurch gekennzeichnet,**
**daß** bei zu verlegender Gesamtleitungslänge abschnittsweise im geschlossenen Rohrvortrieb gearbeitet wird, bei der zeitweise eine hydraulische Pressstation (200) in den durch die Verbautafelelemente gebildeten Verbau eingesetzt, und der Schneidschuh und ggfs die Schneidschuhpresse vom durch die Verbautafelelemente gebildeten Verbau entkoppelt wird.

7. Verfahren nach einem oder mehreren der vorhergehenden Ansprüche,
**dadurch gekennzeichnet,**
**daß** als Widerlagerkräfte für den Schneidschuhvortrieb und/oder den Verbautafelvortrieb zumindest teilweise die Kompressions- oder Verdichtungskräfte im wiederverfüllten Erdreich dienen.

8. Verfahren nach einem oder mehreren der vorhergehenden Ansprüche,
**dadurch gekennzeichnet,**
**daß** die Verbautafelelemente temporär und in etwa senkrecht zu den Schacht-oder Grabenseitenflächen spreizbar und auf diese Weise die Widerlagerkräfte für den Schneidschuhvortrieb aufbringbar sind.

9. Einrichtung (100) zum Verlegen von Leitungsrohren, insbesondere von Kanalisationsrohren im Erdreich (11) mit einer durch das Erdreich bewegbaren Einrichtung mit in Vortriebsrichtung mitbewegbaren Verbautafelelementen (8) und darin mitlaufenden Vortriebsmitteln, einem Schneidschuh (1) und einer Schneidschuhpresse (4), welche in einem Schacht anzuordnen ist, in welchem auch die zu verlegenden Rohre nacheinander einlegbar sind, und die gesamte Einrichtung (100) ausgehend von einer Startgrube mit einem Rohrvortrieb mitbewegbar sind,
**dadurch gekennzeichnet,**
**dass** die Schneidschuhpresse (4) in einem Maschinenrohr angeordnet ist, welches mit der Kontur und dem Maß des zu verlegenden Rohres übereinstimmt und als lediglich nach unten gerichtete Rohrhalbschale sozusagen als Verbauboden (7) ausgebildet ist, und dass zusätzlich seitlich horizontal wirkende Arbeitszylinder (15) an den Verbautafelelementen (8) angelenkt sind, derart, dass wenn die gesamte Einrichtung (100) mit Verbautafelelementen (8) nach vorne geschnitten wird, bzw ins Erdreich schneidet, das Breitenmaß für diesen Gesamtvorschub über die Arbeitszylinder (15) etwas verminderbar ist, so dass die Einrichtung leicht nach vorne schiebbar ist, und wenn bei Bedarf Widerlagerkräfte benötigt werden, wieder eine horizontale seitliche Abspreizung durch entsprechendes Anstellen der horizontal seitlich ausfahrbaren Arbeitszylinder (15) bewirkbar ist.

10. Einrichtung nach Anspruch 9;
**dadurch gekennzeichnet,**
**daß** der mitlaufende aus Verbautafelelementen (8) gebildete Verbau in seiner Längserstreckung etwa 2 bis 3 zu verlegender Einzelrohrlängen entspricht.

11. Einrichtung nach Anspruch 10,
**dadurch gekennzeichnet,**
**daß** innerhalb des Verbaus der Schneidschuh (1) samt Schneidschuhpresse (4) im eingefahrenen Zustand, sowie eine Klemm- und Schubplatte (6) zum Vorschub des Verbaus, und eine Verdichtungs- und Schubplatte (9) zur Verdichtung des wiederverfüllten Erdreiches angeordnet bzw integriert angeordnet sind.

12. Einrichtung nach einem der vorhergehenden Ansprüche 9 bis 11,
**dadurch gekennzeichnet,**
**daß** im vorderen Bereich der Einrichtung (100) der Schneidschuh (1) samt Schneidschuhpresse (4) angeordnet ist, daß im mittleren Bereich der Einlegebereich für die zu verlegenden Einzelrohre liegt, und daß im hinteren Bereich der Wiederverfüllungs- und Verdichtungsbereich für zumindest einen Teil des vorne entnommenen Erdreiches (11) ist.

13. Einrichtung nach einem der vorhergehenden Ansprüche 9 bis 12,
**dadurch gekennzeichnet,**
**daß** ggfs doppeltwirkende als Schubzylinder (22) wirkende Druckmittelzylinder zur sychronen Verdichtungs- und Vortriebbetätigung vorgesehen sind.

14. Einrichtung nach einem der vorhergehenden Ansprüche 9 bis 13,
**dadurch gekennzeichnet,**
**daß** der Verbau durch einzelne Verbautafelelemente (8) segmentiert aufgebaut ist.

15. Einrichtung nach Anspruch 14,
**dadurch gekennzeichnet,**
**daß** die Verbautafelelemente (8) gelenkig miteinander verbunden sind.

16. Einrichtung nach einem der vorhergehenden Ansprüche 9 bis 15,
**dadurch gekennzeichnet,**
**daß** die Verbautafelelemente (8) seitlich relativ zum seitlichen Abstand zum Schneidschuh etwa ≤ 20 cm beweglich sind.

17. Einrichtung nach einem der vorhergehenden Ansprüche 9 bis 16,
**dadurch gekennzeichnet,**
**daß** zur seitlichen und ortsfesten Abstützung der Verbautafelelemente (8) in Bezug auf die Einrichtung quasi x-förmige, senkrecht zur Vortriebsrichtung ausgerichtete, zumindest an einer Unterseite die Rohraußenkontur komplementär nachbildende Abstütz- und Verbauaussteifungen (3) vorhanden sind, die jeweils gegenüberliegende Verbautafelelemente (8) auf definierbarem Abstand zueinander halten.

18. Einrichtung nach Anspruch 17,
**dadurch gekennzeichnet,**
**daß** die Abstütz- und Verbauaussteifungen (3) eine Vertikalteilung aufweisen, an welcher weitere horizontale Stellzylinder (15) zur Veränderung des Abstandes sich gegenüberliegender Verbautafelelemente (8) zueinander vorgesehen sind.

19. Einrichtung nach einem der vorhergehenden Ansprüche 9 bis 18,
**dadurch gekennzeichnet,**
**daß** die Abstütz- und Verbauaussteifungen (3) weitere vertikale Stellzylinder (16) zur Anpassung an eine veränderte Schachttiefe vorgesehen sind.

20. Einrichtung nach einem der vorhergehenden Ansprüche 9 bis 19,
**dadurch gekennzeichnet,**
**daß** weitere Aufsatz-Verbautafelelemente (18) sowie zu deren gleichwertiger Abstützung wie die übrigen Verbautafelelemente (8) Abstütz- und Aussteifungsaufsätze (17) vorgesehen sind.

21. Einrichtung nach Anspruch 20,
**dadurch gekennzeichnet,**
**daß** Abstütz- und Aussteifungsaufsätze (17) in horizontalrichtung spreizbar sind.

22. Einrichtung nach einem der vorhergehenden Ansprüche 9 bis 21,
**dadurch gekennzeichnet,**
**daß** die Klemm- und Schubplatte (6) vertikal geteilt und mit Horizontalstellern (19) versehen ist.

23. Einrichtung nach einem der vorhergehenden Ansprüche 9 bis 22,
**dadurch gekennzeichnet,**
**daß** auch die Klemm- und Schubplatte (6) mit Vertikalstellern (20) zur Verstellung auf eine größere Schachttiefe verstellbar ist.

24. Einrichtung nach Anspruch 23,
**dadurch gekennzeichnet,**
**daß** bei Absenken der Klemm- und Schubplatte (6) ein ebenfalls horizontal spreizbarer Klemm- und Schubaufsatz (21) mit derselben über die Vertikalsteller verbunden ist.

25. Einrichtung nach einem der vorhergehenden Ansprüche 9 bis 24,
**dadurch gekennzeichnet,**
**daß** Fördermittel zum Fördern des Erdreiches (11) von vorne nach hinten vorgesehen sind.

26. Einrichtung nach Anspruch 25,
**dadurch gekennzeichnet,**
**daß** die Fördermittel in die Einrichtung zumindest teilweise, d.h. abschnittsweise integriert, oder an der Einrichtung angebaut sind.

27. Einrichtung nach einem der vorhergehenden Ansprüche 9 bis 26,
**dadurch gekennzeichnet,**
**daß** im hinteren Wiederverfüllbereich der Einrichtung (100) eine druckmittelbetätigbare Verdichtungs- und Schubplatte (9) zur Axialverdichtung und ggfs zum Vorschub des Verbaus angeordnet ist.

28. Einrichtung nach Anspruch 27,
**dadurch gekennzeichnet,**
**daß** ebenso die Verdichtungs- und Schubplatte (9) vertikal geteilt und ansonsten wie die Klemm- und Schubplatte (6) analog den Ansprüche 22 bis 25 verstellbar ausgebildet ist.

29. Einrichtung nach einem der vorhergehenden Ansprüche 9 bis 28,
**dadurch gekennzeichnet,**
**daß** doppeltwirkende druckmittelbetriebene Arbeitszylinder vorgesehen sind, um den Vorschub des Schneidschuhes (1) und/oder des Verbaus und die Verdichtung synchron zu betreiben.

30. Einrichtung nach einem der vorhergehenden Ansprüche 9 bis 29,
**dadurch gekennzeichnet,**
**daß** die Verbautafelelemente (8) mit Injektionsöffnungen (12) versehen sind, zur Einbringung von Schmierstoffen zwischen Schacht-Erdreich und Verbautafelaußenwandung.

31. Einrichtung nach Anspruch 30,
**dadurch gekennzeichnet,**
**dass** der Schmierstoff Tonpulver ist.

## Claims

1. Process for laying of pipes, in particular sewer pipes, in the earth (11) by means of a device which can be moved through the earth and has sheeting panel elements (8), which can be moved along in the driving direction and has driving means travelling therein, a cutting shoe (1) and a cutting shoe jack (4) which is arranged in a shaft in which the pipes to be laid are also placed one after the other, an entire laying shaft being cut if need be with travelling driving means by sheeting panel elements (8) being pushed along forwardss in the laying/cutting direction of the cutting shoe (1), **characterized in that** the cutting shoe jack (4) is arranged in a machine tube which corresponds to the contour and the size of the pipe to be laid and is designed as a merely downwardly directed tube half shell, as sheeting base (7) so to speak, and **in that**, when the entire device (100) with sheeting panel elements (8) is pushed forwardss or cuts into the earth, the breadth for this entire advance is loosened somewhat, i.e. is reduced, such that the device (100) can easily be pushed forwards and it is not until abutment forces are required that lateral bracing is effected again by corresponding setting of the working cylinders.

2. Process according to Claim 1, **characterized in that** the excavated material accumulating at the front in the direction of advance is immediately filled again at the rear in the region of the pipeline section already laid and is compacted in the axial direction, such that a further portion of the abutment forces necessary for the driving is absorbed on the filled excavated material compression.

3. Process according to Claim 1 and/or 2, **characterized in that** the sheeting panel elements are pushed along simultaneously with the cutting shoe drivage.

4. Process according to Claim 1 and/or 2, **characterized in that** the sheeting panel elements can be pushed at least stroke by stroke independently of the cutting shoe drivage.

5. Process according to Claim 4, **characterized in that** the cutting shoe is moved forwards at least stroke by stroke with the sheeting panel elements stopped.

6. Process according to Claim 5, **characterized in that** work is carried out section by section in closed pipe drivage at an overall pipeline length to be laid, at which a hydraulic jacking station (200) is temporarily inserted into the sheeting formed by the sheeting panel elements, and the cutting shoe and if need be the cutting shoe jack are uncoupled from the sheeting formed by the sheeting panel elements.

7. Process according to one or more of the preceding claims, **characterized in that** the compression or compaction forces in the refilled earth serve at least partly as abutment forces for the cutting shoe drivage and/or the sheeting panel drivage.

8. Process according to one or more of the preceding claims, **characterized in that** the sheeting panel elements can be expanded temporarily and approximately perpendicularly to the shaft or trench side surfaces and in this way the abutment forces for the cutting shoe drivage can be applied.

9. Device (100) for laying of pipes, in particular sewer pipes, in the earth (11), comprising a device which can be moved through the earth and has sheeting panel elements (8), which can be moved along in the driving direction, and has driving means travelling therein, a cutting shoe (1) and a cutting shoe jack (4) which is to be arranged in a shaft in which the pipes to be laid can also be placed one after the other, and the entire device (100) can be moved along with a pipe drivage starting from a starting trench, **characterized in that** the cutting shoe jack (4) is arranged in a machine tube which corresponds to the contour and the size of the pipe to be laid and is designed as a merely downwardly directed tube half shell, as sheeting base (7) so to speak, and **in that** laterally and horizontally acting working cylinders (15) are additionally linked to the sheeting panel elements (8) in such a way that, when the entire device (100) with sheeting panel elements (8) is pushed forwards or cuts into the earth, the breadth for this entire advance can be reduced somewhat via the working cylinders (15), such that the device can easily be pushed forwards and, when abutment forces are required, horizontal lateral bracing can be effected again by corresponding setting of the horizontally and laterally extensible working cylinders (15).

10. Device according to Claim 9, **characterized in that** the travelling sheeting formed from sheeting panel elements (8) corresponds in its longitudinal extent to approximately two to three individual pipe lengths to be laid.

11. Device according to Claim 10, **characterized in that** the cutting shoe (1) together with cutting shoe jack (4) in the retracted state and also a clamping and thrust plate (6) for the advance of the sheeting and a compaction and thrust plate (9) for the compaction of the refilled earth are arranged, or are arranged in an integrated manner, inside the sheeting.

12. Device according to one of the preceding Claims 9 to 11, **characterized in that** the cutting shoe (1) together with the cutting shoe jack (4) is arranged in the front region of the device (100), **in that** the laying region for the individual pipes to be laid lies in the central region, and **in that** the refilling and compaction region for at least some of the earth (11) removed at the front is in the rear region.

13. Device according to one of the preceding Claims 9 to 12, **characterized in that** if need be double-acting pressure-medium cylinders acting as thrust cylinders (22) are provided for the synchronous compaction and driving actuation.

14. Device according to one of the preceding Claims 9 to 13, **characterized in that** the sheeting is constructed in a segmented manner by individual sheeting panel elements (8) .

15. Device according to Claim 14, **characterized in that** the sheeting panel elements (8) are connected to one another in an articulated manner.

16. Device according to one of the preceding Claims 9 to 15, **characterized in that** the sheeting panel elements (8) are movable laterally approximately ≤ 20 cm relative to the lateral distance from the cutting shoe.

17. Device according to one of the preceding Claims 9 to 16, **characterized in that** more or less X-shaped supporting and sheeting stiffeners (3) oriented perpendicularly to the driving direction and reproducing the pipe outer contour in a complementary manner at least on an underside are present for the lateral and fixed support of the sheeting panel elements (8) with respect to the device, said supporting and sheeting stiffeners (3) keeping the respectively opposite sheeting panel elements (8) at a definable distance apart.

18. Device according to Claim 17, **characterized in that** the supporting and sheeting stiffeners (3) have a vertical split at which further horizontal adjusting cylinders (15) are provided for varying the distance apart of opposite sheeting panel elements (8).

19. Device according to one of the preceding Claims 9 to 18, **characterized in that** the supporting and sheeting stiffeners (3) have further vertical adjusting cylinders (16) for adaptation to a changed shaft depth.

20. Device according to one of the preceding Claims 9 to 19, **characterized in that** further add-on sheeting panel elements (18) and, for supporting them in manner equivalent to the other sheeting panel elements (8), supporting and stiffening add-on parts (17) are provided.

21. Device according to Claim 20, **characterized in that** the supporting and stiffening add-on parts (17) can be expanded in the horizontal direction.

22. Device according to one of the preceding Claims 9 to 21, **characterized in that** the clamping and thrust plate (6) is split vertically and is provided with horizontal adjusters (19).

23. Device according to one of the preceding Claims 9 to 22, **characterized in that** the clamping and thrust plate (6) can also be adjusted with vertical adjusters (20) for adjusting to a greater shaft depth.

24. Device according to Claim 23, **characterized in that**, when the clamping and thrust plate (6) is being lowered, a likewise horizontally expandable clamping and thrust add-on part (21) is connected to the same via the vertical adjusters.

25. Device according to one of the preceding Claims 9 to 24, **characterized in that** conveying means for conveying the earth (11) from the front to the rear are provided.

26. Device according to Claim 25, **characterized in that** the conveying means are integrated in the device at least partly, i.e. section by section, or are attached to the device.

27. Device according to one of the preceding Claims 9 to 26, **characterized in that** a compaction and thrust plate (9) which can be actuated by pressure medium and is intended for axial compaction and possibly for the advance of the sheeting is arranged in the rear refilling region of the device (100).

28. Device according to Claim 27, **characterized in that** the compaction and thrust plate (9) is likewise vertically split and is otherwise designed to be adjustable like the clamping and thrust plate (6) in a similar manner to Claims 22 to 25.

29. Device according to one of the preceding Claims 9 to 28, **characterized in that** double-acting working cylinders operated by pressure medium are provided in order to synchronously operate the advance of the cutting shoe (1) and/or of the sheeting and the compaction.

30. Device according to one of the preceding Claims 9 to 29, **characterized in that** the sheeting panel elements (8) are provided with injection openings (12) for introducing lubricants between shaft/earth and sheeting panel outer wall.

31. Device according to Claim 30, **characterized in that** the lubricant is clay powder.

## Revendications

1. Procédé pour la pose de conduits, en particulier de canalisations sous la terre (11), au moyen d'un dispositif déplaçable sous la terre, avec des éléments de plaque de blindage (8) entraînés conjointement dans le sens d'avancement, dans lesquels se trouvent des moyens d'avancement fonctionnant conjointement, un sabot de tube (1) et une presse de sabot de tube (4) disposée dans une gaine, dans laquelle se trouvent également les conduits à poser, introduits les uns à la suite des autres, une gaine de pose entière ou avec des moyens d'avancement à fonctionnement couplé étant coupée, des éléments de plaque du blindage (8) étant également poussés vers l'avant dans le sens de coupe et de pose du sabot de tube (1),
**caractérisé en ce que**
la presse de sabot de tube (4) est disposée dans un conduit de machine qui correspond au contour et aux dimensions du conduit à poser et qui est conçu seulement comme une demi-coque de conduite tournée vers le bas, donc pour ainsi dire comme un fond de blindage (7), et **en ce que** lorsque l'ensemble du dispositif (100) avec les éléments de plaque de blindage (8) est poussé vers l'avant ou s'introduit dans la terre, la largeur de cet avancement global est légèrement réduite, de sorte que le dispositif (100) puisse être poussé facilement vers l'avant, et seulement au moment où les forces d'appui sont nécessaires, un écartement latéral est à nouveau produit par une attaque correspondante des cylindres de travail.

2. Procédé selon la revendication 1,
**caractérisé en ce que**
le creusement produit à l'avant dans le sens d'avancement est immédiatement rebouché à l'arrière, dans la région du segment de conduit déjà posé, et compacté dans le sens axial.

3. Procédé selon les revendications 1 et/ou 2,
**caractérisé en ce que**
les éléments de plaque de blindage sont poussés en même temps que l'avancement du sabot de tube.

4. Procédé selon les revendications 1 et/ou 2,
**caractérisé en ce que**
les éléments de plaque de blindage peuvent être déplacés au moins par levage indépendamment de l'avancement du sabot de tube.

5. Procédé selon la revendication 4,
**caractérisé en ce que**
le sabot de tube est déplacé vers l'avant au moins par levage, lorsque les éléments de plaque de blindage sont à l'arrêt.

6. Procédé selon la revendication 5,
**caractérisé en ce que**
pour une longueur de conduit totale à poser, le travail est effectué par segments dans l'avancement de conduit fermé, une station de compression hydraulique étant périodiquement utilisée dans le blindage formé par les éléments de plaque de blindage, et la presse de sabot de tube étant le cas échéant désaccouplée du blindage formé par les éléments de plaque de blindage.

7. Procédé selon l'une ou plusieurs des revendications précédentes,
**caractérisé en ce que**
les forces de compression ou de compactage dans le sol rebouché servent au moins partiellement en tant que forces d'appui pour l'avancement du sabot de tube et/ou pour l'avancement des plaques de blindage.

8. Procédé selon l'une ou plusieurs des revendications précédentes,
**caractérisé en ce que**
les éléments de plaque de blindage peuvent être temporairement écartés à peu près verticalement par rapport aux faces latérales de la gaine ou du fossé, et les forces d'appui pour l'avancement du sabot de tube peuvent être produites de cette manière.

9. Dispositif (100) pour la pose de conduits, en particulier de canalisations, sous la terre (11), au moyen d'un dispositif déplaçable sous la terre, avec des éléments de plaque de blindage (8) entraînés conjointement dans le sens d'avancement, dans lesquels se trouvent des moyens d'avancement fonctionnant conjointement, un sabot de tube (1) et une presse de sabot de tube (4) disposée dans une gaine, dans laquelle se trouvent également les conduits à poser, introduits les uns à la suite des autres, et l'ensemble du dispositif (100) pouvant être déplacé conjointement avec un avancement de conduite en partant d'une fosse de départ,
**caractérisé en ce que**
la presse de sabot de tube (4) est disposée dans un conduit de machine qui correspond au contour et aux dimensions du conduit à poser et qui est conçu seulement comme une demi-coque de conduite tournée vers le bas, donc pour ainsi dire comme un fond de blindage (7), et **en ce que** lorsque l'ensemble du dispositif (100) avec les éléments de plaque de blindage (8) est poussé vers l'avant ou s'introduit dans la terre, la largeur de cet avancement global peut être légèrement réduite par les cylindres de travail (15), de sorte que le dispositif puisse être poussé facilement vers l'avant, et lorsque des forces d'appui deviennent nécessaires, un écartement latéral horizontal peut être à nouveau produit par une attaque correspondante des cylindres de travail (15) braqués latéralement à l'horizontale.

10. Dispositif selon la revendication 9,
**caractérisé en ce que**
le blindage à fonctionnement couplé, formé à partir des éléments de plaque de blindage (8), correspond dans sa longueur environ à 2 ou 3 longueurs de conduits séparés destinés à être posés.

11. Dispositif selon la revendication 10,
**caractérisé en ce que**
le sabot de tube (1) avec la presse de sabot de tube (4) à l'état introduit, ainsi qu'une plaque de serrage et de poussée (6) censée pousser le blindage, et une plaque de compactage et de poussée (9) censée compacter le creusement rempli de terre sont disposés ou disposés de manière intégrée dans le blindage.

12. Dispositif selon l'une des revendications 9 à 11,
**caractérisé en ce que**
le sabot de tube (1) y compris la presse de sabot de tube (4) sont disposés dans la région avant du dispositif (100), **en ce que** la région d'insertion pour les différents conduits à poser se trouve dans la région centrale, et **en ce que** la région de re-remplissage et de compactage pour au moins une partie de la terre (11) creusée à l'avant se trouve dans la région arrière.

13. Dispositif selon l'une des revendications 9 à 12,
**caractérisé en ce que**
le cas échéant, des cylindres de pression agissant comme des cylindres de poussée (22) sont prévus pour l'actionnement du compactage et de l'avancement.

14. Dispositif selon l'une des revendications 9 à 13,
**caractérisé en ce que**
le blindage est construit de façon segmentée, à partir de différents éléments de plaque de blindage (8).

15. Dispositif selon la revendication 14,
**caractérisé en ce que**
les éléments de plaque de blindage (8) sont reliés entre eux de façon articulée.

16. Dispositif selon l'une des revendications 9 à 15,
**caractérisé en ce que**
les éléments de plaque de blindage (8) peuvent être déplacés d'environ = 20 cm, latéralement par rapport à l'écart latéral du sabot de tube.

17. Dispositif selon l'une des revendications 9 à 16,
**caractérisé en ce que**
des raidisseurs de blindage et d'appui (3) reproduisant de façon complémentaire le contour extérieur du conduit au moins sur une face inférieure, tout en ayant une forme quasiment en X et en étant verticaux par rapport au sens d'avancement, sont prévus pour l'appui latéral et stationnaire des éléments de plaque de blindage (8) par rapport au dispositif, ces raidisseurs permettant de maintenir des éléments de plaque de blindage (8) opposés en respectant un écart définissable.

18. Dispositif selon la revendication 17,
**caractérisé en ce que**
les raidisseurs de blindage et d'appui (3) comportent une séparation verticale, sur laquelle sont prévus d'autres cylindres de travail horizontaux (15) pour la modification de l'écart entre les éléments de plaque de blindage (8) opposés.

19. Dispositif selon l'une des revendications 9 à 18,
**caractérisé en ce que**
les raidisseurs de blindage et d'appui (3) comportent d'autres cylindres de travail verticaux (16) prévus pour l'ajustement à une profondeur de gaine modifiée.

20. Dispositif selon l'une des revendications 9 à 19,
**caractérisé en ce que**
d'autres éléments de plaque de blindage (18) rapportés sont prévus, ainsi que des coiffes de raidissage et d'appui (17), destinées à leur assurer un appui identique à celui des autres éléments de plaque de blindage (8).

21. Dispositif selon la revendication 20,
**caractérisé en ce que**
les coiffes de raidissage et d'appui (17) peuvent être écartées horizontalement.

22. Dispositif selon l'une des revendications 9 à 21,
**caractérisé en ce que**
la plaque de serrage et de poussée (6) est prévue avec une division verticale et des moyens d'ajustement horizontal (19).

23. Dispositif selon l'une des revendications 9 à 22,
**caractérisé en ce que**
la plaque de serrage et de poussée (6) peut également être réglée avec des moyens d'ajustement vertical (20) pour l'ajustement en fonction d'une profondeur de gaine plus importante.

24. Dispositif selon la revendication 23,
**caractérisé en ce que**
lors de l'abaissement de la plaque de serrage et de poussée (6), une coiffe de serrage et de poussée (21) pouvant être écartée horizontalement est reliée à ladite plaque à l'aide des moyens d'ajustement vertical.

25. Dispositif selon l'une des revendications 9 à 24,
**caractérisé en ce que**
des moyens de transport sont prévus pour transporter la terre (11) de l'avant vers l'arrière.

26. Dispositif selon la revendication 25,
**caractérisé en ce que**
les moyens de transport sont intégrés au dispositif, au moins partiellement, c'est-à-dire par segments, ou alors installés sur le dispositif.

27. Dispositif selon l'une des revendications 9 à 26,
**caractérisé en ce que**
une plaque de compactage et de poussée (9) actionnable par un moyen de pression est disposée dans la région arrière de re-remplissage du dispositif (100), pour le compactage axial ou la poussée du blindage.

28. Dispositif selon la revendication 27,
**caractérisé en ce que**
la plaque de compactage et de poussée (9) est également divisée verticalement et par ailleurs conçue comme la plaque de serrage et de poussée (6), capable d'être ajustée de la manière décrite dans les revendications 22 à 25.

29. Dispositif selon l'une des revendications 9 à 28,
**caractérisé en ce que**
des cylindres de travail à double action, activés par un moyen de pression, sont prévus pour activer de façon synchrone la poussée du sabot de tube (1) et/ou du blindage et le compactage.

30. Dispositif selon l'une des revendications 9 à 29,
**caractérisé en ce que**
les éléments de plaque de blindage (8) sont pourvus d'orifices d'injection (12) pour l'introduction de lubrifiants entre la gaine sous terre et la paroi extérieure des plaques de blindage.

31. Dispositif selon la revendication 30,
**caractérisé en ce que**
le lubrifiant est de la poudre d'argile.
